# EUROPEAN PATENT APPLICATION

(11) **EP 3 163 800 A1**
(43) Date of publication of application: **03.05.2017**
(21) Application number: 16191060.9
(22) Date of filing: 28.09.2016
(51) Int. Cl.: H04L 12/24, H04L 12/46

(54) **NETWORK CONTROLLER AND NETWORK SYSTEM**

(30) Priority: 28.10.2015 JP 2015212206
(71) Applicant: FUJITSU LIMITED, 211-8588 Kanagawa (JP)
(72) Inventor: Tsubouchi, Koji, Kanagawa, 211-8588 (JP); Kano, Shinya, Kanagawa, 211-8588 (JP)
(74) Representative: Hoffmann Eitle

(57) **Abstract**

A network controller (11) includes a specifying unit (114), a route information generator (115), and a route information setting unit (116). The specifying unit (114) may specify a tunnel section in a data transfer route based on classification information in which a plurality of nodes are classified according to whether each of the nodes corresponds to a tunnel node available to generate or terminate a tunnel in the data transfer route. The route information generator (115) may generate route information in which a tunnel node positioned at a start point of the specified tunnel section is set as a source node and a tunnel node positioned at an end point of the specified tunnel section is set as a destination node. The route information setting unit (116) may set the generated route information to a node position in the specified tunnel section.

## Description

### FIELD

The embodiments discussed herein are related to a network controller and a network system.

### BACKGROUND

In a communication network, a route (also referred to as a "data transfer route" for the sake of convenience) for transferring data such as packet data maybe set by a network controller.

For example, the network controller can generate information (also referred to as "route information") indicating a transfer destination corresponding to address information of data received by a communication node positioned on the data transfer route and set the generated information to the communication node.

### Related Art Documents List

Patent Document 1: JP 2012-44601 A
Patent Document 2: JP 2009-10606 A

A tunnel section may be formed in the data transfer route, for example, through a device or a function available to form a tunnel of a virtual private network (VPN).

When the tunnel section exists in the data transfer route, the network controller may be unavailable to perform an appropriate route setting for the tunnel section. In other words, the network controller may be unavailable to support a route setting for the data transfer route including the tunnel section.

### SUMMARY

In one aspect, an object of a technology disclosed in this specification is to achieve an appropriate route setting even when the tunnel section is include in a data transfer route.

In one aspect, a network controller may control a setting of a data transfer route routed through a plurality of nodes in a network and includes a specifying unit, a route information generator and a route information setting unit. The specifying unit may specify a tunnel section in the data transfer route based on classification information in which the plurality of nodes are classified according to whether each of the nodes corresponds to a tunnel node available to generate or terminate a tunnel in the data transfer route. The route information generator may generate route information in which a tunnel node positioned at a start point of the specified tunnel section is set as a source node and a tunnel node positioned at an end point of the specified tunnel section is set as a destination node; and the route information setting unit may set the generated route information to a node position in the specified tunnel section.

In one aspect, a network system may include a plurality of nodes and a network controller configured to control a setting of a data transfer route routed through the plurality of nodes. The network controller may include the specifying unit, the route information generator, and the route information setting unit.

According to one aspect, it is possible to perform an appropriate route setting even when there is a tunnel section in a data transfer route.

### BRIEF DESCRIPTION OF DRAWINGS

FIG. 1 is a diagram schematically illustrating an example of a service chain construction using a network function virtualization (NFV) technique;
FIG. 2 is a diagram for illustrating a network (NW) function (Type 1) in which none of source address and destination address of data is changed;
FIG. 3 is a diagram for illustrating an NW function (Type 2) in which a source address of data is changed but a destination address is not changed;
FIG. 4 is a diagram for illustrating an NW function (Type 3) in which a source address of data is not changed and a destination address is changed;
FIG. 5 is a diagram for illustrating an NW function (Type 4) in which both a source address and a destination address of data are changed;
FIG. 6 is a diagram illustrating an example of a route of a route setting target and route information set to an NW function and a relay node exists in the route together with a change in address information of data;
FIG. 7 is a diagram illustrating an example of route information set to an NW function and a relay node when there is a tunnel section in a route of a route setting target together with a change in address information of data;
FIG. 8 is a diagram illustrating an example of appropriate route information for a node positioned at a start point of the tunnel section illustrated in FIG. 7;
FIG. 9 is a diagram illustrating an example of appropriate route information for a relay node positioned in the tunnel section of FIG. 7;
FIG. 10 is a diagram for illustrating information of a hierarchized logical route generated by a management server according to a first embodiment;
FIG. 11 is a block diagram illustrating an exemplary functional configuration of the management server according to the first embodiment;
FIG. 12 is a block diagram illustrating an exemplary hardware configuration of the management server according to the first embodiment;
FIG. 13 is a flowchart illustrating an exemplary operation of the management server according to the first embodiment;
FIG. 14 is a diagram for illustrating information of a hierarchized logical route generated by the management server according to the first embodiment;
FIG. 15 is a flowchart illustrating an example of a process of generating the information of the hierarchized logical route of FIG. 14 through the management server according to the first embodiment;
FIG. 16 is a flowchart illustrating an example of a process of generating route information through the management server according to the first embodiment;
FIG. 17 is a block diagram illustrating an exemplary network configuration according to a second embodiment;
FIG. 18 is a block diagram illustrating an exemplary functional configuration of the management server according to the second embodiment;
FIG. 19 is a diagram illustrating an example in which one of a pair of tunnel functions is not present in a data transfer route in a management domain of the management server according to the second embodiment;
FIG. 20 is a diagram for illustrating information of a hierarchized logical route generated by a management server in an example of FIG. 19;
FIG. 21 is a flowchart illustrating an example of a process of generating route information through the management server according to the second embodiment;
FIG. 22 is a diagram illustrating an exemplary node arrangement when a return path of a data transfer route illustrated in FIG. 19 is focused;
FIG. 23 is a diagram for illustrating information of a hierarchized logical route generated by a management server in the example of FIG. 22;
FIG. 24 is a flowchart illustrating an example of a process of generating the information of the hierarchized logical route of FIG. 23 through the management server according to the second embodiment;
FIG. 25 is a diagram illustrating an example in which tunnel nesting is not set to a data transfer route in a third embodiment;
FIG. 26 is a diagram for illustrating information of a hierarchized logical route generated by a management server in an example of FIG. 25;
FIG. 27 is a flowchart illustrating an example of a process of generating the information of the hierarchized logical route of FIG. 26 through the management server according to the third embodiment; and

FIG. 28 is a flowchart illustrating an example of a process of generating information of a hierarchized logical route for a return path of the data transfer route of FIG. 25 through the management server according to the third embodiment.

### DESCRIPTION OF EMBODIMENTS

Hereinafter, an embodiment will be described with reference to the drawings. However, the embodiment described below is only illustrative and does not intend to exclude application of various modifications and technologies that are not explicitly described below. Further, various exemplary aspects described below may be optionally combined and carried out. In addition, components assigned the same reference numeral in the drawings used for the following embodiment will represent identical or same components unless otherwise specified.

### (First embodiment)

A Software Defined Networking (SDN) has attracted attention as an example of a communication network technique. In the SDN, a management server can intensively manage and control communication devices such as switches or routers constituting a network and set a communication route dynamically in response to a request.

The "management server" may be understood to be an example of a "network controller" that sets and controls a communication route in a network. The "network controller" may be abbreviated as a "controller."

In other words, the "network controller" may be implemented using a general-purpose server computer or may be implemented as a dedicated control device specialized for a setting and control of a communication route in a network.

The "communication route" is, for example, a route (also referred to as a "path") in which certain data such as packet data or frame data or a signal is transmitted and may be referred to as a "data transfer route" for the sake of convenience.

The packet data and the frame data may be abbreviated as a "packet" and a "frame," respectively. Thus, the "data transfer route" for packets may be referred to as a "packet transfers route" for the sake of convenience.

Further, provision of a "service chain" by the SDN has attracted attention as an example of the communication network technique as well. The "service chain" refers to, for example, a data transfer route formed such that a plurality of network (NW) functions are connected to be able to perform communication in order to provide various network services.

The NW function refers to, for example, a function provided by a communication device serving as a network element. The "communication device" may be referred to as a "network device" or may be referred to as a "communication node" or simply as anode."

Examples of the NW function include an NAT, a FW, a proxy, a cache, a WOC, a DPI, an IDS, and an SLB.

The "NAT" is an abbreviation of a "Network Address Translation," the "FW" is an abbreviation of a "Fire Wall," and the "WOC" is an abbreviation of a "Wide area network Optimization Controller."

The "DPI" is an abbreviation of a "deep packet inspection." The "IDS" is an abbreviation of an "Intrusion Detection System," and the "SLB" is an abbreviation of a "Server Load Balancer."

In addition to the SDN, a network functions virtualization (NFV) technique has attracted attention as one of the communication network techniques. In the NFV, the NW function is not implemented using dedicated hardware but implemented such that a virtual machine (VM) is generated and executes software.

In the management server, a technique in which the service chain based on the SDN is combined with the NFV may be applied. For example, the management server may construct the service chain of the SDN using the NFV in which the NW function can be dynamically arranged.

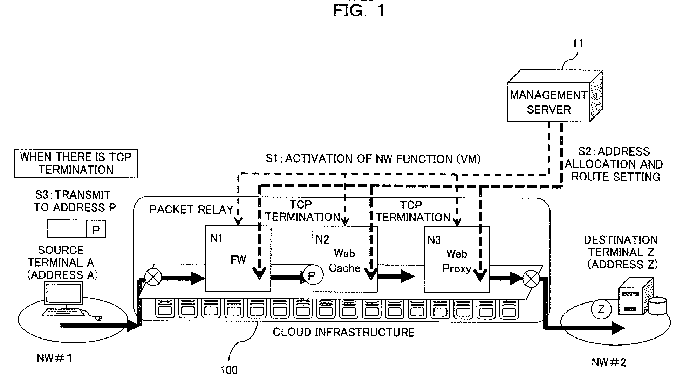

FIG. 1 schematically illustrates an example of a service chain construction using the NFV. FIG. 1 schematically illustrates an example in which a management server 11 arranges three NW functions N1 to N3 as a VM in a cloud infrastructure 100.

In the example of FIG. 1, data sent by a source terminal A in a first network (NW) #1 is transferred to a destination terminal Z in a second network (NW) #2 through the NW functions N1 to N3.

Each of the source terminal A and the destination terminal Z is an example of an end node and may be referred to as a "source node A" and a "destination node Z," respectively. For example, the networks #1 and #2 may be networks arranged at different strongholds and may be local area networks (LANs).

The three NW functions N1 to N3 arranged in the cloud infrastructure 100 are, for example, the FW, the web cache, and the web proxy.

The FW is an example of a function of monitoring data flowing via a network, blocking, for example, the passage of a packet having specific address information, and allows the passage of a packet having specific address information.

The web proxy is an example of a function of accessing a web server (not illustrated), for example, instead of the source node A.

The web cache is an example of a function of caching, for example, web data accessed by the web proxy. For example, when the source node A accesses the same web data again, the web cache transmits the cached web data to the source node A.

Here, the construction of the service chain using the NFV may include three Processing Steps S1 to S3 to be described below.

(Processing S1) The management server 11 arranges one or more NW functions Nx as the VM in the cloud infrastructure 100 and activates the NW functions Nx in response to a service chain construction request inputted by a network administrator (which may be referred to as a "user" or an "operator" for the sake of convenience). The service chain construction request may be referred to as a "service chain request." "x" in "Nx" indicates an integer of 1 or larger.

(Processing S2) The management server 11 allocates address information to the NW functions Nx arranged as the VM and sets a data transfer route constituting the service chain. The setting of the data transfer route includes, for example, generation of the route information to be set to the NW function Nx of the route setting target in the management server 11 and setting of the generated route information to the NW function Nx of the route setting target.

(Processing S3) A node in the service chain transmits data to a destination node or the NW function Nx corresponding to a relay node according to the presence or absence of the NW function Nx terminating a TCP or the presence or absence of the NW function Nx converting address information of data. The "TCP" is an abbreviation of a "Transmission Control Protocol." In the example of FIG. 1, since there is the web cache (an address P) terminating the TCP in the service chain, the source node A may transmit data to the address P.

For example, the address information is a concept including either or both of a source address (SA) indicative of a source of data and a destination address (DA) indicative of a destination of data. The address information may be, for example, an Internet Protocol (IP) address or may be an address used in any other communication protocol.

The NW function Nx changing (which may be referred to as "converting") the address information may exist in the service chain. For example, the NW function Nx converting either or both of the source address and the destination address of data may be arranged.

Examples of the NW function Nx converting the source address include a transparent proxy, an SNAT, an SNAPT, a non-transparent proxy, and a non-transparent cache. The "SNAT" is an abbreviation of a "Source based NAT," and the "SNAPT" is an abbreviation of a "Source based Network Address Port Translation."

Examples of the NW function Nx converting the destination address include a DNAT, a non-transparent proxy, and a non-transparent cache. The "DNAT" is an abbreviation of a "Destination based Network Address Translation."

Thus, each of the non-transparent proxy and the non-transparent cache is an example of the NW function Nx converting both of the source address and the destination address.

The management server 11 may classify the NW functions Nx performing various processes according to a conversion form of the address information and generate route information to be set to the NW functions Nx based on the classification.

For example, the management server 11 may generate the route information to be set to the NW function Nx and the relay node existing in the route of the route setting target through the following procedures.

The management server 11 searches for a route including the NW function Nx or the relay node from the source node A to the destination node Z. The route search may be performed based on topology information of a network. A route search method such as Dijkstra's algorithm may be applied to the route search.

Then, the management server 11 classifies the NW functions Nx existing in the route searched through the route search, for example, into four types according to an address conversion form of data.
Type 1: an NW function that does not change (that is, transmits) both of the source address and the destination address
Type 2: an NW function that changes the source address but does not change the destination address
Type 3: an NW function that does not change the source address but changes the destination address
Type 4: an NW function that changes both of the source address and the destination address

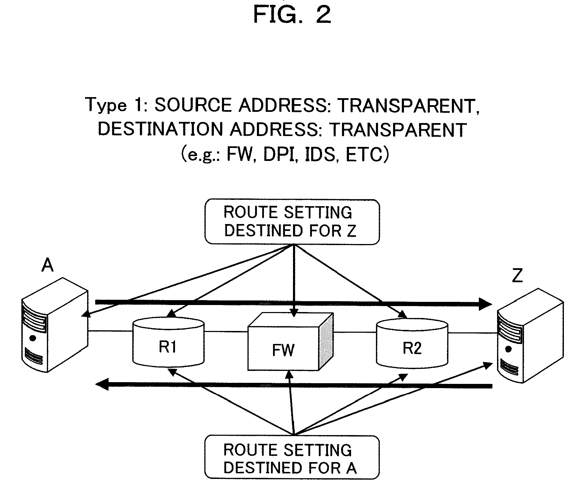

Examples of the NW function Nx of Type 1 include the FW, the DPI, and the IDS. For example, a router R1, an FW, and a router R2 exist in a route between a node A and a node Z as illustrated in FIG. 2.

Each of the routers R1 and R2 is an examples of the relay node. The routers and the FW change none of the source address and the destination address of data transmitted along the route between the node A and the node Z. Thus, the routers R1 and R2 serving as the example of the relay node may be classified as the NW function Nx of Type 1.

For this reason, in a routing setting in a direction from the node A to the node Z, the management server 11 may set the route information in which the address of the node A is set as the source address, and the address of the node Z is set as the destination address to the routers R1 and R2 and the FW.

Further, in a routing setting in an opposite direction from the node Z to the node A, the management server 11 may set route information in which the address of the node Z is set as the source address, and the address of the node A is set as the destination address to the routers R1 and R2 and the FW.

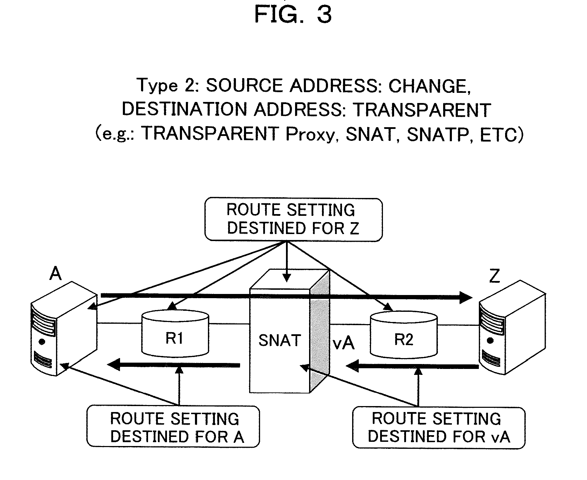

Examples of the NW function Nx of Type 2 include the transparent proxy, the SNAT, the SNAT, and the SNAPT. For example, the router R1, the SNAT, and the router R2 are assumed to exist in the route between the node A and the node Z as illustrated in FIG. 3.

The routers R1 and R2 change none of the source address and the destination address of data transmitted along the route between the node A and the node Z, but the SNAT does not change the destination address of data but changes the source address.

For this reason, the management server 11 may perform a routing setting of a section between the node Z and the SNAT and a routing setting of a section between the SNAT and the node A individually.

For example, the management server 11 may perform the routing setting based on the source address before the change on the router R2 through which data passes before the address changes and the routing setting based on the source address after the change on the router R1 through which data passes after the address changes.

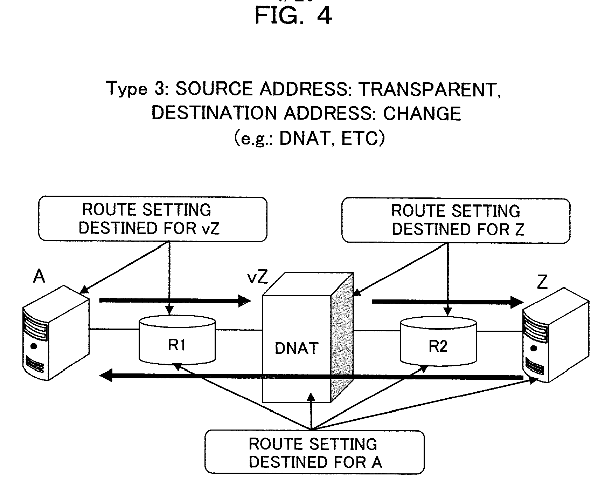

An example of the NW function Nx of Type 3 is the DNAT. For example, the router R1, the DNAT, and the router R2 are assumed to exist in the route between the node A and the node Z as illustrated in FIG. 4.

The routers R1 and R2 change none of the source address and the destination address of data transmitted along the route between the node A and the node Z, but the DNAT does not change the source address of data but change the destination address.

For this reason, the management server 11 may perform a routing setting of a section between the node Z and the DNAT and a routing setting of a section between the DNAT and the node A individually.

For example, the management server 11 may perform the routing setting based on the destination address before the change on the router R1 through which data passes before the address changes and the routing setting based on the destination address after the change on the router R2 through which data passes after the address changes.

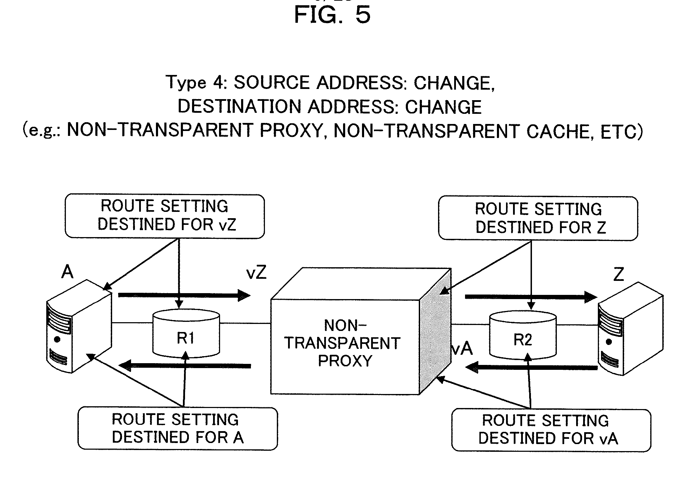

Examples of the NW function Nx of Type 4 include the non-transparent proxy and the non-transparent cache. For example, the router R1, the non-transparent proxy, and the router R2 are assumed to exist in the route between the node A and the node Z as illustrated in FIG. 5.

The routers R1 and R2 change none of the source address and the destination address of data transmitted along the route between the node A and the node Z, but the non-transparent proxy changes both of the source address and the destination address of data.

For this reason, the management server 11 may perform a routing setting of a section between the node Z and the DNAT and a routing setting of a section between the DNAT and the node A individually.

For example, in the routing setting in the direction from the node A to the node Z, the management server 11 may perform the routing setting based on the source address and the destination address before the change on the router R1 through which data passes before the address change. Further, the management server 11 may perform the routing setting based on the source address and the destination address after the change on the router R2 through which data passes after the address change.

In the routing setting in the direction from the node Z to the node A, for example, the management server 11 may perform the routing setting the source address and the destination address before the change on the router R2 through which data passes before the address change. Further, the management server 11 may perform the routing setting based on the source address and the destination address after the change on the router R1 through which data passes after the address change.

For example, the management server 11 may generate the route information for the routing setting through the following procedures.

The management server 11 searches for the NW function Nx that changes "destination address" and the destination node while sequentially tracing the route of the route setting target in a direction from the NW function Nx or the relay node serving as the target for which the route information is generated to the destination node (also referred to as "downstream" for the sake of convenience). The NW functions Nx that changes the destination address are the NW functions Nx of Type 3 and Type 4.

As a result of downstream search, the management server 11 sets an address allocated to any one of the NW function of Type 3, the NW function of Type 4, and the destination node that are initially searched as the "destination address" of the route information set to the NW function Nx or the relay node of the target.

Further, the management server 11 searches for the NW function Nx that changes" source address" and the source node while sequentially tracing the route of the route setting target in a direction from the NW function Nx or the relay node serving as the target for which the route information is generated to the source node (also referred to as "upstream" for the sake of convenience). The NW functions Nx that changes the source address are the NW functions Nx of Type 2 and Type 4.

As a result of upstream search, the management server 11 sets an address allocated to any one of the NW function of Type 2, the NW function of Type 4, and the source node that are initially searched as the " source address" of the route information set to the NW function Nx or the relay node of the target.

Then, the management server 11 generates the route information based on the destination address and the source address specified by the downstream and upstream searches as described above and the route of the route setting target.

For example, a next hop (NH) address for a pair of the destination address and the source address may be included in the route information. The next hop address is an example of information indicating a next transfer destination (a next hop, NH) of data.

In addition to the next hop address, an address allocated to an output interface of data may be calculated in a route calculation and included in the route information. For example, when the NW function or the relay node includes a plurality of output interfaces according to a plurality of routes, the data transfer route may be identified by an address of the output interface.

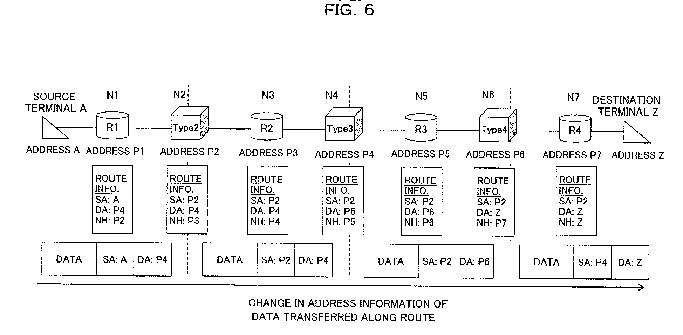

FIG. 6 illustrates an example of the route of the route setting target and the route information set to the NW function Nx and the relay node existing in the route. Each of the NW function and the relay node may be referred to as a "node" for the sake of convenience.

In the example of FIG. 6, a router R1, an NW function of Type 2, a router R2, an NW function of Type 3, a router R3, an NW function of Type 4, and a router R4 exist in the route from the source node A to the destination node Z as an example of seven nodes N1 to N7. Each of the routers R1 to R4 is an example of the relay node and may be understood to correspond to the NW function of Type 1.
for example, addresses P1 to P7 are assumed to be allocated to the nodes N1 to N7, respectively. An address A is assumed to be allocated to the source node A, and the address Z is assumed to be allocated to the destination node Z.

In this case, for downstream communication from the source node A to the destination node Z, the route information of the source address=A, the destination address=P4, and the next hop address=P2 is set to the node N1 (the router R1).

The route information of the source address=P2, the destination address=P4, and the next hop address=P3 is set to the node N2 (the NW function of Type 2). The source address=P2, the destination address=P4, and the next hop address=P4 are set as the route information of the node N3 (the router R2).

The route information of the source address=P2, the destination address=P6, and the next hop address=P5 is set to the node N4 (the NW function of Type 3). The route information of the source address=P2, destination address P6, and the next hop address=P6 is set to the node N5 (the router R3).

The route information of the source address=P6, the destination address=Z, and the next hop address=P7 is set to the node N6 (the NW function of Type 4). The route information of the source address=P6, the destination address=Z, and the next hop address=Z is set to the node N7 (the router R4).

Here, the management server 11 may generate the route information set to the nodes N1 to N7 through the following procedures.

For example, the management server 11 searches for the nodes Nx of Type 3 and Type 4 that change the destination address and the destination node Z while sequentially tracing the route of the route setting target the downstream direction from the node Nx of the target for which the route information is generated to the destination node Z.

For example, when the node N1 (the router R1) is selected as the target for which the route information is generated, the management server 11 selects the node N2 adjacent to the downstream side of the selected node N1.

Since the node N2 is the NW function of Type 2 but neither the nodes of Type 3 and Type 4 that change the destination address nor the destination node Z, the management server 11 selects the node N3 (the router R2) adjacent to the downstream side of the node N2.

Since the router R2 is neither the nodes of Type 3 and Type 4 that change the destination address nor the destination node Z, the management server 11 further selects the node N4 adjacent to the downstream side of the router R2.

Since the node N4 is the NW function of Type 3 that changes the destination address, the management server 11 generates the route information of the node N1 (the router R1) in which the address "P4" of the node N4 is set as the destination address. Thus, the "destination address" of the route information set to the node N1 (the router R1) is "P4."

Further, when the node N2 is selected as the target for which the route information is generated, the management server 11 selects the node N3 (the router R2) adjacent to the downstream side of the node N2.

Since the router R2 is neither the NW function of Type 3 or Type 4 that changes the destination address nor the destination node Z, the management server 11 further selects the node N4 adjacent to the downstream side of the router R2.

Since the node N4 is the NW function of Type 3 that changes the destination address, the management server 11 generates the route information of the node N2 in which the address "P4" of the node N4 is set as the destination address. Thus, the "destination address" of the route information set to the node N2 is "P4."

Further, when the node N3 (the router R2) is selected as the target for which the route information is generated, the management server 11 selects the node N4 adjacent to the downstream side of the router R2.

Since the node N4 is the NW function of Type 3 that changes the destination address, the management server 11 generates the route information of the node N3 (the router R2) in which the address "P4" of the node N4 is set as the destination address. Thus, the "destination address" of the route information set to the node N3 is "P4."

Further, when the node N4 is selected as the target for which the route information is generated, the management server 11 selects the node N5 (the router R3) adjacent to the downstream side of the node N4.

Since the router R3 is neither the NW function of Type 3 or Type 4 that changes the destination address nor the destination node Z, the management server 11 further selects the node N6 adjacent to the downstream side of the router R3.

Since the node N6 is the NW function of Type 4 that changes the destination address, the management server 11 generates the route information of the node N4 in which the address "P6" of the node N6 is set as the destination address. Thus, the "destination address" of the route information set to the node N4 is "P6."

Further, when the node N5 (the router R3) is selected as the target for which the route information is generated, the management server 11 selects the node N6 adjacent to the downstream side of the router R3.

Since the node N6 is the NW function of Type 4 that changes the destination address, the management server 11 generates the route information of the node N5 in which the address "P6" of the node N6 is set as the destination address. Thus, the "destination address" of the route information set to the router R3 is "P6."

Further, when the node N6 is selected as the target for which the route information is generated, the management server 11 selects the node N7 (the router R4) adjacent to the downstream side of the node N6.

Since the router R4 is neither the NW function of Type 3 or Type 4 that changes the destination address nor the destination node Z, the management server 11 further selects the destination node Z adjacent to the downstream side of the router R4.

Since the destination node Z is selected, the management server 11 generates the route information of the node N6 in which the address "Z" of the destination node Z is set as the destination address. Thus, the "destination address" of the route information set to the node N6 is "Z."

Further, when the node N7 (the router R4) is selected as the target for which the route information is generated, the management server 11 selects the destination node Z adjacent to the downstream side of the node N7.

Since the destination node Z is selected, the management server 11 generates the route information of the node N7 in which the address "Z" of the destination node Z is set as the destination address. Thus, the "destination address" of the route information set to the router R4 is "Z."

For example, the management server 11 searches for the nodes of Type 2 and Type 4 that change the source address and the source node A while sequentially tracing the route of the route setting target in the upstream direction from the node Nx of the target for which the route information is generated to the source node A.

In the example of FIG. 6, when the node N7 (the router R4) is selected as the target for which the route information is generated, the management server 11 selects the node N6 adjacent to the upstream side of the router R4.

Since the node N6 is the NW function of Type 4 that changes the source address, the management server 11 generates the route information of the node N7 in which the address "P6" of the node N6 is set as the source address. Thus, the "source address" of the route information set to the router R4 is "P6."

Further, when the node N6 is selected as the target for which the route information is generated, since the node N6 is the NW function of Type 4 that changes the source address, the management server 11 generates the route information in which the address "P6" of the node N6 is set as the source address. Thus, the "source address" of the route information set to the node N6 is "P6."

Further, when the node N5 (the router R3) is selected as the target for which the route information is generated, the management server 11 selects the node N4 adjacent to the upstream side of the router R3.

Since the node N4 is the NW function of Type 3 but neither the NW function of Type 2 or Type 4 that changes the source address nor the source node A, the management server 11 further selects the node N3 (the router R2) adjacent to the upstream side of the node N4.

Since the router R2 is neither the NW function of Type 2 or Type 4 that changes the source address nor the source node A, the management server 11 further selects the node N2 adjacent to the upstream side of the router R2.

Since the node N2 is the NW function of Type 2 that changes the source address, the management server 11 generates the route information of the node N5 in which the address "P2" of the node N2 is set as the source address. Thus, the "source address" of the route information set to the router R3 is "P2."

Further, when the node N4 is selected as the target for which the route information is generated, the management server 11 selects the node N3 (the router R2) adjacent to the upstream side of the node N4.

Since the router R2 is neither the NW function of Type 2 or Type 4 that changes the source address nor the source node A, the management server 11 selects the node N2 adjacent to the upstream side of the router R2.

Since the node N2 is the NW function of Type 2 that changes the source address, the management server 11 generates the route information of the node N4 in which the address "P2" of the node N2 is set as the source address. Thus, the "source address" of the route information set to the node N4 is "P2."

Further, when the node N3 (the router R2) is selected as the target for which the route information is generated, the management server 11 selects the NW function of the node N2 adjacent to the upstream side of the router R2.

Since the node N2 is the NW function of Type 2 that changes the source address, the management server 11 generates the route information of the NW function of the node N3 in which the address "P2" of the NW function of the node N2 is set as the source address. Thus, the "source address" of the route information set to the router R2 is "P2."

Further, when the node N2 is selected as the target for which the route information is generated, since the node N2 is the NW function of Type 2 that changes the source address, the management server 11 generates the route information in which the address "P2" of the node N2 is set as the source address. Thus, the "source address" of the route information set to the node N2 is "P2."

Further, when the node N1 (the router R1) is selected as the target for which the route information is generated, since the router R1 is neither the NW function of Type 2 or Type 4 that changes the source address nor the source node A, the management server 11 selects the source node A adjacent to the upstream side of the router R1.

Since the source node A is selected, the management server 11 generates the route information of the node N1 in which the address "A" of the source node A is set as the source address. Thus, the "source address" of the route information set to the router R1 is "A."

As described above, the management server 11 can search for the node that converts the destination address in the downstream direction of the route of the route setting target, search for the node that converts the source address in the upstream direction, and generate the route information to be set to the node positioned in the route.

Hereinafter, the route information generation method described above is also referred to as a "node search route information generation method" for the sake of convenience. In the node search route information generation method, the node search in the upstream direction and the node search in the downstream direction may be performed sequentially or in parallel.

By the way, an NW function available to generate or terminate a tunnel such as a VPN device may be included in the service chain. The "tunnel" indicates a virtual communication path.

The NW function available to generate or terminate the tunnel may be referred to as a "tunnel function" or a "tunnel node." In the following description, for the sake of convenience, the NW function available to generate a tunnel is also referred to as a "tunnel generation function" or a "tunnel function (generation)," and the NW function available to terminate a tunnel is also referred to as a "tunnel termination function" or a "tunnel function (termination)."

The tunnel generation function corresponds to a start point of the tunnel section, and may encapsulate received data and transfer the encapsulated data to the virtual communication path. The tunnel termination function corresponds to an end point of the tunnel section, and may decapsulate data received from the tunnel and transfer the decapsulated data to a transfer destination corresponding to a destination.

When the NW function available to generate or terminate the tunnel exists in the service chain, there are cases in which the management server 11 is unable to perform an appropriate route setting on the tunnel section formed by the tunnel function.

For example, two route tables, that is, a route table #1 that is referred to before data is encapsulated and a route table #2 that is referred to after data is encapsulated may be set to the tunnel function Nx available to generate the tunnel. The route table #2 corresponds to the route table #2 for the tunnel section.

Information indicating that the route table #2 is referred to for the destination of received data may be set to the route information in the route table #1. The route information indicating that the destination of data after the received data is encapsulated is set as the tunnel termination function may be included in the route information in the route table #2.

The tunnel function (generation)Nx can transfer data to the tunnel and transfer packets to the tunnel function (termination) Nx using the two route tables #1 and #2.

Thus, when the route information is set to the tunnel function (generation) Nx, the management server 11 preferably identify that the NW function Nx is the "tunnel function," generates the route tables #1 and #2, and sets the route tables #1 and #2 to the tunnel function (generation) Nx.

However, the classification of the NW functions Nx of Type 1 to Type 4 is a classification based on the source address and the destination address of data, and it is difficult to identify that the NW function Nx is the "tunnel function" using the classification of the NW functions Nx of Type 1 to Type 4. For this reason, it is hard to set the route information appropriate to the tunnel function Nx.

The NW function Nx existing in the tunnel section transfers data using the tunnel function (termination) as the destination. Thus, it is desirable to set the route information in which the tunnel function (termination) is calculated as the destination to the NW function Nx existing in the tunnel section.

However, if it is difficult to identify or specify the tunnel section as described above, it is difficult to identify the NW function existing in the tunnel section as well, and thus it is difficult to set the appropriate route information to the NW function existing in the tunnel section.

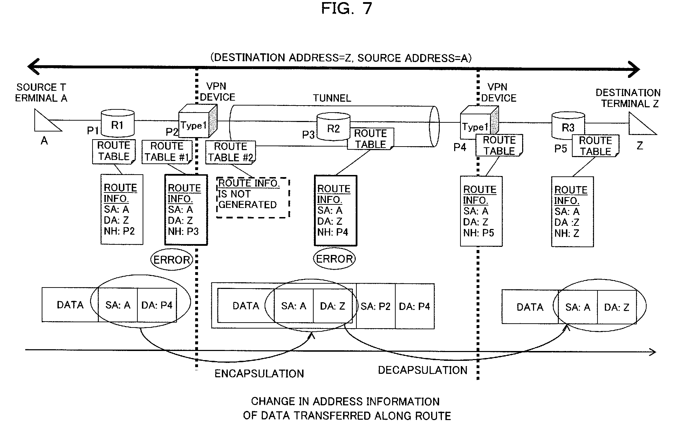

FIG. 7 schematically illustrates an example in which it is difficult to set the appropriate route information when the tunnel function is included in the service chain. In the example of FIG. 7, a router R1, a VPN device, a router R2, a VPN device, and a router R3 exist in a route from a source node A to a destination node Z as an example of nodes N1 to N5. For example, addresses P1 to P5 are allocated to the nodes N1 to N5.

Each of the VPN devices of the nodes N2 and N4 may be defined as the NW function of Type1. The VPN devices of the nodes N2 and N4 are referred to as a "VPN node N2" and a "VPN node N4" for the sake of convenience.

The tunnel is formed by the tunnel function between the VPN node N2 and the VPN node N4. In communication in the direction from the source node A to the destination node Z, the VPN node N2 corresponds to the tunnel function (generation) N2, and the VPN node N4 corresponds to the tunnel function (termination) N4.

For example, the VPN node N2 encapsulates data (source address A; destination address Z) transmitted from the source node A to the destination node Z into data (source address P2; destination address P4) destined for the VPN node N4 as illustrated in the lower portion of FIG. 7. The encapsulated data is transferred to the tunnel.

The VPN node N4 serving as the tunnel termination function decapsulates the data received through the tunnel, extracts data (source address A; destination address Z) destined for the destination node Z, and transfers the extracted data to the downstream side (for example, the router R2).

Here, in the example of FIG. 7, the management server 11 is assumed to generate the route information to be set to the VPN node N1 serving as the tunnel generation function according to the "node search route information generation method" described above.

In this case, since the VPN node N1 is classified as the NW function of Type 1, the management server 11 generates the route information in which the address Z of the destination node Z is set as the destination address, and the address A of the source node A is set as the source address. The management server 11 generates the route information in which the next hop address for a pair of the destination address Z and the source address A is the address P3 of the router R3.

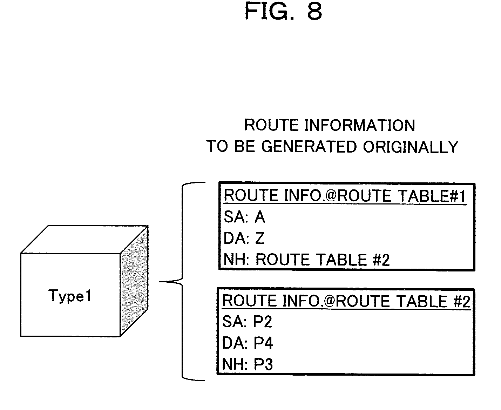

However, the route information has an error, and the appropriate route information for the VPN node N1 available to generate the tunnel is route information indicated by the following two route tables #1 and #2 as illustrated in FIG. 8:
The route table #1: route information indicating that the address Z of the destination node Z is set as the destination address, the address A of the source node A is set as the source address, and the route table #2 is referred to for a pair of the destination address Z and the source address A; and
The route table #2: route information indicating that the address P4 of the VPN node N4 is set as the destination address, the address P2 of the VPN node N2 is set as the source address, and the next hop address for a pair of the destination address P4 and the source address P2 is the address P3 of the router R3.

For the router R2 positioned on the midway of the tunnel section, route information indicating that according to the "node search route information generation method" described above, the next hop address for the pair of the destination address Z and the source address A is the address P4 of the VPN node N4 is generated.

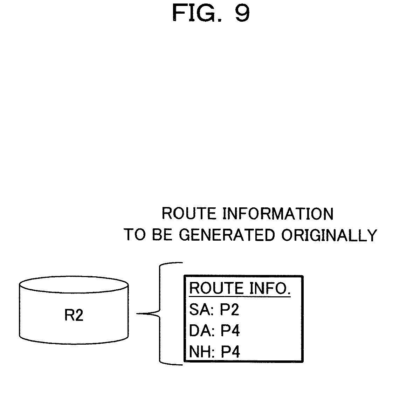

However, the route information has an error, the appropriate route information for the router R2 is route information in which the address P4 of the VPN node N4 available to terminate the tunnel is set as the destination address, and the address P2 of the VPN node N2 available to generate the tunnel is set as the source address (see FIG. 9). The next hop address for the pair of the destination address P4 and the source address P2 is the address P4 of the VPN node N4.

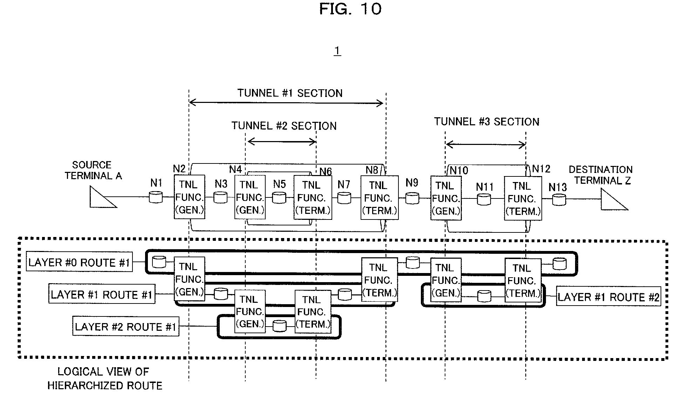

Even when the tunnel function exists in the route of the route setting target, it is possible to set the appropriate route information for the tunnel function and the node positioned on the midway of the tunnel section, and thus the management server 11 generates a logical view of a hierarchized route illustrated in FIG. 10.

The logical view of the hierarchized route is an example of information of a route that is obtained, for example, by logically hierarchizing (referred to as a "breaking down") the data transfer route according to the presence or absence of the tunnel function. The management server 11 can identify and specify the tunnel section existing in the data transfer route based on information of the hierarchized logical route.

In the example of FIG. 10, in a network system (also referred to as a "communication system") 1, for example, 13 nodes N1 to N13 exists in a route from a source node A to a destination node Z. A part or all of a plurality of nodes Nx may be implemented by the VM.

The nodes N1, N3, N5, N7, N9, N11, and N13 are, for example, an NW function or a relay node (for example, a router) other than a tunnel (TNL) function.

The node N2 is a tunnel function available to generate a first tunnel #1 in the route of the route setting target, and the node N8 is a tunnel function available to terminate the tunnel #1.

The node N4 is a tunnel function available to generate a second tunnel #2 in a section of the tunnel #1. The node N6 is a tunnel function available to terminate the tunnel #2. Thus, another tunnel #2 is hierarchically formed in the section of the tunnel #1.

The node N10 is a tunnel function available to generate a third tunnel #3 in the route of the route setting target, and the node N12 is a tunnel function available to terminate the tunnel #3.

In the above-described node arrangement, the route from the source node A to the destination node Z can be hierarchized into, for example, the following four logical routes.

For example, the management server 11 attaches the node N1, the tunnel function (generation) N2, the tunnel function (termination) N8, the node N9, the tunnel function (generation) N10, the tunnel function (termination) N12, and the node N13 into a route #1 of a layer #0 corresponding to a top layer.

The management server 11 attaches the tunnel function (generation) N2, the node N3, the tunnel function (generation) N4, and the tunnel function (termination) N6, the node N7, and the tunnel function (termination) N8 into a first route #1 of a layer #1 serving as a layer lower than the layer #0.

The management server 11 attaches the tunnel function (generation) N10, the node N11, and the tunnel function (termination) N12 into a second route #2 of the layer #1.

The tunnel function (generation) N4, the node N5, and the tunnel function (termination) N6 are attached to a route #1 of a layer #2 serving as a layer lower than the layer #1.

The management server 11 can set the appropriate route information for the tunnel function existing the route of each layer and the relay node positioned on the midway of the tunnel section by the routing setting according to each hierarchized logical route. For example, the management server 11 can support the routing setting in which the section of another tunnel #2 is set in the section of the tunnel #1 as well.

### (Exemplary configuration of management server)

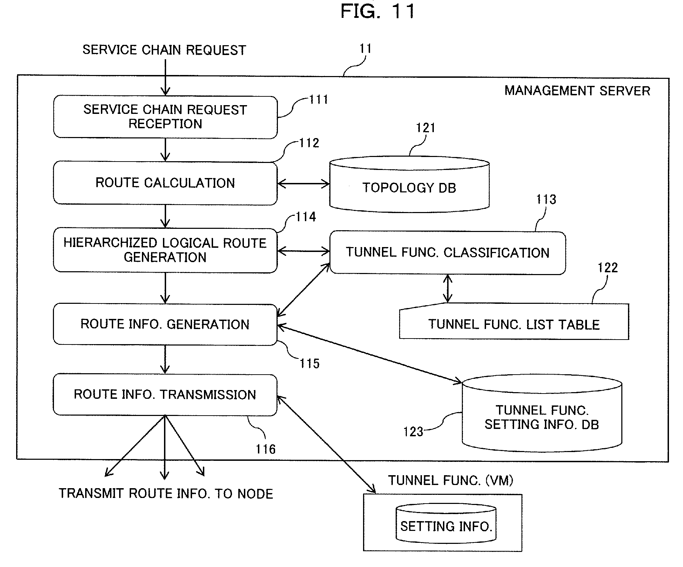

FIG. 11 illustrates an exemplary function configuration of the management server 11. The management server 11 includes, for example, a service chain request receiver 111, a route calculator 112, a tunnel function classifier 113, a hierarchized logical route generator 114, a route information generator 115, and a route information transmitter 116 as illustrated in FIG. 11. The management server 11 includes a topology database (DB) 121, a tunnel function list table 122, and a tunnel function setting information DB 123.

The service chain request receiver 111 receives, for example, a service chain request from the network administrator or the user using the network. The service chain request may include information in which one or more NW functions through which data passes during the data transfer are designated. Information of the NW function designated in the service chain request may include information identifying a type of NW function, for example, information indicating whether or not the router is the VPN device. The service chain request receiver 111 may transfer the received service chain request to the route calculator 112.

For example, the topology DB 121 stores the topology information of the network including the relay node and the VM that executes the NW function. In addition to the topology information or as an element of the topology information, information indicating a position to which the source node and the destination node are connected may be stored in the topology DB 121.

The route calculator 112 may calculates the data transfer route routed through the designated NW function from the source node to the destination node, for example, based on the received service chain request and the topology information stored in the topology DB 121.

The calculation of the data transfer route may include route calculations for the route between the source node and the NW function, the route between the NW functions, and the route of the NW function and the destination node.

Information of the calculated data transfer route may include information indicating the NW functions existing in the data transfer route, an arrangement order of the NW functions, and the like. In the following description, the node search in the data transfer route may be understood to correspond to detection or a search of information of the data transfer route.

The tunnel function list table 122 is an example of data or information of a table form or a list form in which a list of the tunnel function (generation), the tunnel function (termination), and the non-tunnel NW function is registered. For example, information represented in the following Table 1 may be registered in the tunnel function list table 122.

**[Table 1]**

| Tunnel function list table (example) | |
|---|---|
| tunnel function (generation) | VPN device (ingress) |
| | GRE tunnel device (ingress) |
| | Vx LAN tunnel device (ingress) |
| tunnel function (termination) | VPN device (egress) |
| | GRE tunnel device (egress) |
| | Vx LAN tunnel device (egress) |
| non-tunnel NW function | router |

The "GRE" is an abbreviation of a "Generic Routing Encapsulation," and the "Vx LAN" is an abbreviation of a "Virtual Extensible Local Area Network." The "ingress" indicates a node corresponding to an entrance (also referred to as a "start point") of the tunnel section, and the "egress" indicates a node corresponding to an exit (also referred to as an "end point") of the tunnel section. The registration of information in the tunnel function list table 122 may be performed in advance, for example, by the network administrator.

The tunnel function classifier 113 may classify each of the NW functions existing in the data transfer route into the tunnel function (generation), the tunnel function (termination), or the NW function other than the tunnel function, for example, based on the tunnel function list table 122. The NW function other than the tunnel function is also referred to as a "non-tunnel NW function."

As described above, the management server 11 can identify or specify the tunnel section in the data transfer route based on information classified according to whether or not the NW function is the tunnel function.

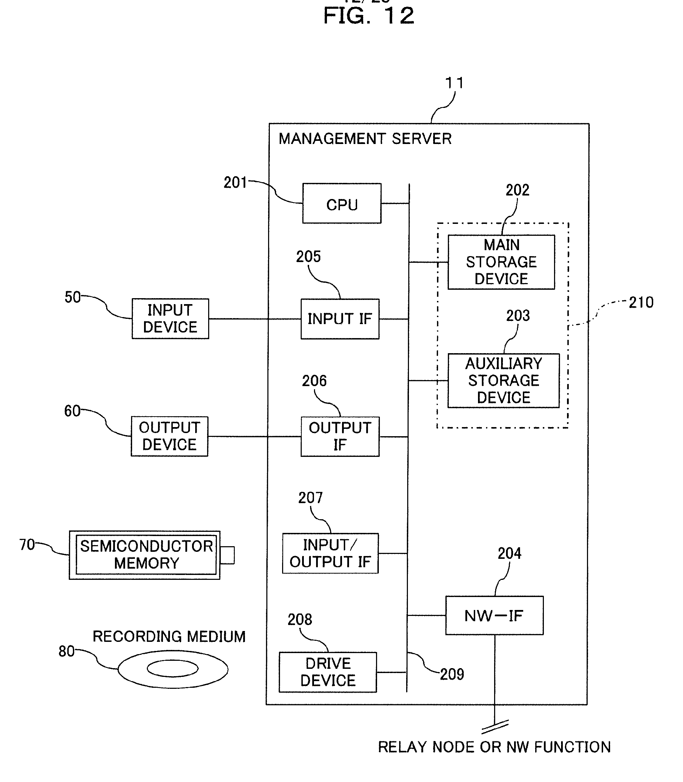

The information of the NW functions classified based on the tunnel function list table 122 and the tunnel function list table 122 may be stored, for example, a storage unit 210 which will be described later with reference to FIG. 12.

The hierarchized logical route generator 114 generates information of the hierarchized logical route illustrated in FIG. 10, for example, based on a result of classifying the NW functions included in the data transfer route calculated by the route calculator 112 through the tunnel function classifier 113.

The information is also referred to as hierarchized logical route information" for the sake of convenience. A specific process of generating he hierarchized logical route information will be described later. It is possible to specify the tunnel section in the data transfer route based on the hierarchized logical route information. Thus, the hierarchized logical route generator 114 is an example of a specifying unit capable of specifying the tunnel section based on the classification information of the NW functions.

In the hierarchized logical route information, the tunnel function may be attached to both the logical route of the higher layer and the logical route of the lower layer. For example, the route information for the logical route of the higher layer corresponds to information of the first the route table #1 set to the tunnel function, and the route information for the logical route of the lower layer corresponds to information of the second the route table #2 set to the tunnel function.
the route information generator 115 generates the route information to be set to the NW functions existing in the hierarchized logical routes and the relay nodes, for example, based on the hierarchized logical route information. For the generation of the route information, the "node search route information generation method" described above may be applied.

However, when the route information set to the tunnel function (generation) is generated, the route information to be generated changes according to whether or not the tunnel function is positioned at the start point (that is, the most upstream side) of the hierarchized the logical route as follows.

For example, when the tunnel function is positioned at the start point of the hierarchized the logical route, the route information generator 115 may generate the route information for the route table #2 according to the "node search route information generation method" described above.

When the tunnel function is positioned at the start point of the hierarchized the logical route, the route information generator 115 may generate the route information for the route table #1. The route information for the route table #1 may include information indicating the route table #2 is referred to for the destination of data specified by the "node search route information generation method." The route information of the route table #2 may include route information in which the tunnel function (termination) in the logical route corresponding to the route table #2 is set as the destination.

When the route information for the non-tunnel NW function existing the logical route of the lower layer than the top layer and the relay node is generated, the route information generator 115 may generate route information in which, for example, the NW function positioned at the end point (that is, the most downstream side) of the route is set as the destination.

For example, the route information transmitter 116 performs a setting such that the route information generated by the route information generator 115 is transmitted to the NW function or the relay node corresponding thereto. The route information transmitter 116 is an example of a route information setting unit that sets the route information to the node positioned in the tunnel section.

The tunnel function setting information DB 123 stores, for example, setting information (also referred to as "tunnel setting information") for the tunnel function. The setting information for the tunnel function is, for example, information used when the tunnel function forms the tunnel using the setting information, and examples of the setting information for the tunnel function include a tunnel identifier, a tunnel encryption type, an encryption key, and address information of an opposite (or corresponding) tunnel function available to terminate the tunnel.

When the management server 11 undertakes a process of accessing the tunnel function and forming the tunnel, the setting information for the tunnel function may be stored in the tunnel function setting information DB 123.

The route information generator 115 may specify the address information of the opposite tunnel function available to terminate the tunnel based on the setting information stored in the DB 123 and use the specified address information for generation of the route information. Thus, the management server 11 can appropriately generate the route information for an opposite tunnel positioned outside a management domain of the management server 11.

The setting information for the tunnel function may be acquired by accessing the VM in which the tunnel function operates through the management server 11 or may be provided as information set to the management server 11, for example, when the management server 11 is activated.

Thus, when the management server 11 does not undertake the process of forming the tunnel, the route information generator 115 can specify the address information of the opposite tunnel function available to terminate the tunnel based on the setting information for the tunnel function and use the specified address information for the generation of the route information.

### (Exemplary hardware configuration of management server)

FIG. 12 is a block diagram illustrating an exemplary hardware configuration of the management server 11. The management server 11 may be, for example, a dedicated server computer that generates and sets the route information or a general-purpose computer.

The management server 11 includes, for example, a processor 201, a main storage device 202, an auxiliary storage device 203, and a network interface (NW-IF) 204 as illustrated in FIG. 12.

The management server 11 may optionally include, for example, a part or all of an input interface (IF) 205, an output IF 206, an input/output IF 207, and a drive device 208.

The CPU 201, the main storage device 202, the auxiliary storage device 203, the IFs 204 to 207, and the drive device 208 may be connected, for example, to a communication bus 209 to be able to communicate with one another through the processor 201.

The processor 201 is an example of an operation device or an operation circuit having an operation capability. The management server 11 may include a plurality of processors 201. As the processor 201, a CPU may be applied, or another operation device, for example, an integrated circuit (IC) such as an MPU may be applied. The "CPU" is an abbreviation of a "Central Processing Unit," and the "MPU" is an abbreviation of "Micro Processing Unit." The processor 201 having an operation capability is also referred to as a "computer" for the sake of convenience.

As the auxiliary storage device 203, for example, a non-volatile memory such as an Erasable Programmable Read Only Memory (EPROM), a hard disk drive (HDD), or a solid state drive (SSD) may be applied.

The auxiliary storage device 203 may store, for example, an operating system (OS), various programs, and data and information used by the processor 201 when a program is executed.

The main storage device 202 may provide, for example, a storage area "also referred to as a "work area" into which a program or data stored in the auxiliary storage device 203 is loaded to the processor 201 or may be used as a buffer. As the main storage device 202, for example, a semiconductor memory such as a RAM may be applied. The "RAM" is an abbreviation of a "Random Access Memory."

The main storage device 202 and the auxiliary storage device 203 may be referred to collectively as a "storage unit 210." The storage unit 210 may store the topology DB 121, the tunnel function list table 122, and the tunnel function setting information DB 123 which are illustrated in FIG. 11.

As the program stored in the storage unit 210, a program (also referred to as a "routing setting program" for the sake of convenience) capable of implementing a part or all of the components 111 to 116 illustrated in FIG. 11 may be included. A part or all of program codes constituting the routing setting program may be described as a part of the OS.

The processor 201 may be understood to implement various kinds of functions of the management server 11 by reading and executing the routing setting program stored in the storage unit 210.

The program or data may be provided in a form in which it is recorded in a computer readable recording medium 80. Examples of the recording medium include a flexible disk, a CD-ROM, a CD-R, a CD-RW, a MO, a DVD, a Blu-ray disk, and a portable hard disk. A semiconductor memory 70 such as a Universal Serial Bus (USB) memory is an example of the recording medium 80 as well.

The program or data stored in the semiconductor memory 70 may be read out to the processor 201, for example, through the input/output IF 207. The program or data stored in the recording medium 80 may be read out to the processor 201, for example, through the drive device 208.

The program or data may be provided (that is, "downloaded") from another server computer or the like to the management server 11 via a communication line. For example, the program or data may be provided to the management server 11 through the NW-IF 204. The program or data may be provided from an input device 50 to the management server 11 through the input IF 205.

Examples of the input device 50 include a pointing device such as a mouse, an operating button (which may be a touch panel type), and a microphone. Data input from the input device 50 may be provided to the processor 201, for example, through the input IF 205. For example, the input device 50 may be used for tasks such as registration or change of a setting in the management server 11 by the operator, various kinds of operations of the management server 11, and a data input.

An output device 60 is connected, for example, to the output IF 206 and outputs a processing result of the processor 201. Examples of the output device 60 include an audio output device such as a speaker, a display device such as a liquid crystal display (LCD), and a printing device such as a printer. A touch panel type LCD may be understood to correspond to the input device 50 as well. The output device 60 may be used for configuration of a setting by the operator of the management server 11 or an output of various kinds of notification to be given to the operator, or the like.

The NW-IF 204 is connected, for example, to a network and performs transmission and reception of information or data. The network to which the NW-IF 204 is connected may be a network in which the management server 11 performs communication related to control with the relay node or the NW function to be managed and controlled. The network is also referred to as a "control network" for the sake of convenience.

The communication in the control network is also referred to as "control communication" or "control plane (CP) communication" for the sake of convenience. The control network may be a wired network or a wireless network. Thus, the NW-IF 204 may include either or both of an interface for a connection with a wired network and an interface for a connection with a wireless network.

As a non-limiting example, the NW-IF 204 may be a Network Interface Card (NIC) or a wireless Local Area Network (LAN) card. Data or information received through the NW-IF 204 may be provided to the processor 201.

The exemplary hardware configuration of the management server 11 illustrated in FIG. 12 is merely an example, and hardware in the management server 11 may be appropriately changed. For example, addition, deletion, or division of an arbitrary hardware block, integration of hardware blocks by arbitrary combination, or addition, deletion, or the like of a communication bus may be appropriately performed in the management server 11.

### (Operation example)

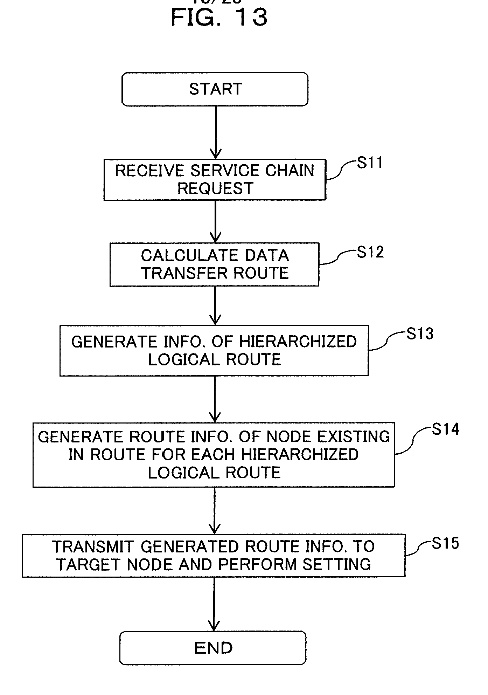

FIG. 13 is a flowchart illustrating an exemplary operation of the management server 11.

As illustrated in FIG. 13, the management server 11 receives the service chain request through the service chain request receiver 111 (Processing S11).

Upon receiving the service chain request, for example, the management server 11 calculates the data transfer route routed through the node Nx designated by the service chain request based on the topology DB 121, for example, through the route calculator 112 (Processing S12).

For example, the management server 11 generates the hierarchized logical route information illustrated in FIG. 10 based on the calculated data transfer route, for example, through the hierarchized logical route generator 114 (Processing S13).

The management server 11 generates the route information set to the node Nx existing in the route for each hierarchized the logical route based on the generated hierarchized logical route information, for example, through the route information generator 115 (Processing S14).

Then, the management server 11 transmits the generated route information to the node Nx of the target, for example, through the route information transmitter 116 so that the route information is set (Processing S15).

### (Example of process of generating hierarchized logical route information)

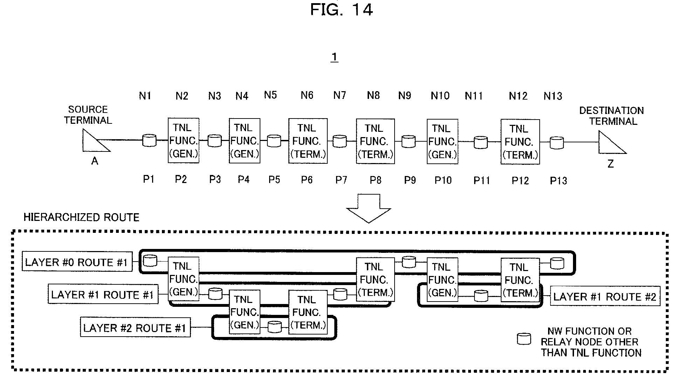

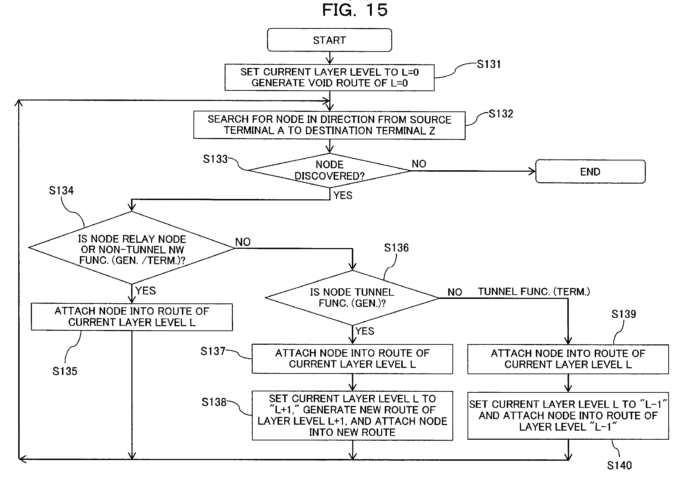

Next, an example of a process of generating the hierarchized logical route information for the data transfer route illustrated in FIG. 14 through the management server 11 in Processing S13 will be described. FIG. 15 is a flowchart illustrating an example of an operation corresponding to the generation process.

FIG. 14 illustrates an example in which 13 nodes N1 to N13 exist in a data transfer route from a source node A to a destination node Z, similarly to FIG. 10.

Each of the nodes N1, N3, N5, N7, N9, N11, and N13 is a non-tunnel NW function or a relay node (for example, a router) as illustrated in FIG. 14. The nodes N2 and N8 are a tunnel function (generation) and a tunnel function (termination) of a first tunnel #1.

The nodes N4 and N6 are a tunnel function (generation) and a tunnel function (termination) of a second the tunnel #2 formed in the section of the tunnel #1. The nodes N10 and N12 are a tunnel function (generation) and a tunnel function (termination) of a third tunnel #3.

As described above, the tunnel function classifier 113 classifies whether or not each of the nodes N1 to N13 corresponds to any one of the tunnel function, the non-tunnel NW function, and the relay node.

In the exemplary node arrangements illustrated in FIGS. 10 and 14, the hierarchized logical route generator 114 searches for the node Nx by sequentially tracing the data transfer route from the source node A to the destination node Z calculated by the route calculator 112 in the (downstream) direction toward the destination node Z. Then, the hierarchized logical route generator 114 determines a layer in which the searched node Nx is positioned, and generates the hierarchized the logical route.

For example, as illustrated in FIG. 15, the hierarchized logical route generator 114 sets a current layer level L at which the search starts to "0," generates an empty (or void) logical route #1 of L=0 (Processing S131), and searches for the node Nx by tracing the data transfer route in the downstream direction (Processing S132).

When the node Nx does not exist in the data transfer route (NO in Processing S133), the hierarchized logical route generator 114 may determine that the target node Nx to which the route information does not exist and then end the process.

On the other hand, when the node Nx existing in the data transfer route is discovered by the search (YES in Processing S133), the hierarchized logical route generator 114 may check whether or not the node Nx is either the relay node or the non-tunnel NW function (Processing S134).

When the node Nx discovered by the search is either the relay node or the non-tunnel NW function (YES in Processing S134), the hierarchized logical route generator 114 may determine that the node Nx is a node constituting the route #1 of the current layer level L=0.

Thus, the hierarchized logical route generator 114 may attach the node Nx into the route #1 of the current layer level L=0 (Processing S135). For example, the node N1 is attached to the route #1 of the layer (level) #0.

When the node Nx discovered by the search is neither the relay node nor the non-tunnel NW function (NO in Processing S134), the hierarchized logical route generator 114 may check whether or not the node Nx is the tunnel function (generation) (Processing S136).

When the node Nx is the tunnel function (generation) (YES in Processing S136), the hierarchized logical route generator 114 may determine that the node Nx is a node constituting the route #1 of the current layer level L=0. Thus, the hierarchized logical route generator 114 may attach the node Nx into the route #1 of the current layer level L=0 (Processing S137).

The node Nx serving as the tunnel function (generation) may be determined to be a node constituting a lower layer L=1 obtained by increasing the current layer level L by "+1."

Based on the determination, the hierarchized logical route generator 114 may generate a new logical route #1 of the layer level L=1 and may attach the node Nx into the route #1 of the layer #1 (Processing S138).

For example, the node N2 is attached to both the route #1 of the layer #0 and the route #1 of the layer #1 according to Processing S137 and S138.

On the other hand, when the node Nx discovered by the search is the tunnel function (termination) (NO in Processing S136), the hierarchized logical route generator 114 may determine that the node Nx is a node constituting a route #1 of the current layer level L=1.

Based on the determination, the hierarchized logical route generator 114 may attach the node Nx into the route #1 of the current layer level L=1 (Processing S139).

The hierarchized logical route generator 114 may determine that the node Nx is a node constituting a route #1 of an higher layer L=0 obtained by decreasing the current layer level L by "-1" and may attach the node Nx into the route #1 of the layer level L=0 (Processing S140).

For example, the node N8 is attached to both the route #1 of the layer #1 and the route #1 of the layer #0 according to Processing S139 and S140.

Next, procedures (1) to (15) of generating the hierarchized logical route information based on the operation of the flowchart of FIG. 15 through the hierarchized logical route generator 114 for the node arrangement of FIG. 14 will be further described.

### (1) Start

The hierarchized logical route generator 114 sets the current layer level L to L=0, and searches for the node Nx by sequentially tracking the data transfer route in the direction from the source node A to the destination node Z (corresponding to Processing S131 and S132 in FIG. 15).
- Current layer level L: 0
- Route #1 of layer #0: []
[] indicates an empty (or void) logical route.

### (2) Node N1 discovery

The node N1 is discovered through the node search. The hierarchized logical route generator 114 determines that the node N1 is the non-tunnel NW function based on the information of the tunnel function list table 122. Thus, the hierarchized logical route generator 114 determines that the node N1 is a node constituting the route #1 of the current layer level L=0, and attaches the node N1 into the route #1 of the layer #0 (corresponding to Processing S135 in FIG. 15).
- Current layer level L: 0
- Route #1 of layer #0: [N1]

### (3) Node N2 discovery

Then, the node N2 is discovered through the node search. The hierarchized logical route generator 114 determines that the node N2 is the tunnel function (generation) based on the information of the tunnel function list table 122.

Thus, the hierarchized logical route generator 114 may determine that the node N2 is a node constituting the route #1 of the current layer level L=0. Base on the determination, the hierarchized logical route generator 114 may attach the node N2 into the route #1 of the layer #0 (corresponding to Processing S137 in FIG. 15).

The hierarchized logical route generator 114 may determine that the node N2 is a node constituting the lower layer #1 in which the current layer level L is changed by"+1." Base on the determination, the hierarchized logical route generator 114 may generate a new route #1 of the layer #1 and attach the node N2 into the route #1 of the layer #1 (corresponding to Processing S138 in FIG. 15).
- Current layer level L: 0+1=1
- Route #1 of layer #0: [N1, N2]
- Route #1 of layer #1: [N2]

### (4) Node N3 discovery

Then, the node N3 is discovered through the node search. The hierarchized logical route generator 114 determines that the node N3 is the non-tunnel NW function based on the information of the tunnel function list table 122.

Thus, the hierarchized logical route generator 114 may determine that the node N3 is a node constituting the route #1 of the current layer level L=1, and may attach the node N3 into the route #1 of the layer #1 (corresponding to Processing S135 in FIG. 15).
- Current layer level L: 1
- Route #1 of layer #0: [N1, N2]
- Route #1 of layer #1: [N2, N3]

### (5) Node N4 discovery

Then, the node N4 is discovered through the node search. The hierarchized logical route generator 114 determines that the node N4 is the tunnel function (generation) based on the information of the tunnel function list table 122.

Thus, the hierarchized logical route generator 114 may determine that the node N4 is a node constituting the route #1 of the current layer level L=1 and may attach the node N4 into the route #1 of the layer #1 (corresponding to Processing S137 in FIG. 15).

The hierarchized logical route generator 114 may determine that the node N4 is a node constituting the lower layer #2 in which the current layer level L=1 is changed by"+1." Base on the determination, the hierarchized logical route generator 114 may generates a new route #1 of the layer level L=2 and may attach the node N4 into the route #1 of the layer #2 (corresponding to Processing S138 in FIG. 15).
- Current layer level L: 1+1=2
- Route #1 of layer #0: [N1, N2]
- Route #1 of layer #1: [N2, N3, N4]
- Route #1 of layer #2: [N4]

### (6) Node N5 discovery

Then, the node N5 is discovered through the node search. The hierarchized logical route generator 114 determines that the node N5 is the non-tunnel function based on the information of the tunnel function list table 122.

Thus, the hierarchized logical route generator 114 may determine that the node N5 is a node constituting the route #1 of the current layer level L=2 and may attach the node N5 into the route #1 of the layer #2 (corresponding to Processing S135 in FIG. 15).
- Current layer level L: 2
- Route #1 of layer #0 : [N1, N2]
- Route #1 of layer #1: [N2, N3, N4]
- Route #1 of layer #2: [N4, N5]

### (7) Node N6 discovery

Then, the node N6 is discovered through the node search. The hierarchized logical route generator 114 determines that the node N6 is the tunnel function (termination) based on the information of the tunnel function list table 122.

Thus, the hierarchized logical route generator 114 may determine that the node N6 is a node constituting the route #1 of the current layer level L=2 and may attach the node N6 into the route #1 of the layer #2 (corresponding to Processing S139 in FIG. 15).

The hierarchized logical route generator 114 may determine that the node N6 is a node constituting a route #1 of a higher layer #1 in which the current layer level L=2 is changed by "-1" and may attach the node N6 into the route #1 of the layer #1 (corresponding to Processing S140 in FIG. 15).
- Current layer level L: 2-1=1
- Route #1 of layer #0: [N1, N2]
- Route #1 of layer #1: [N2, N3, N4, N6]
- Route #1 of layer #2: [N4, N5, N6]

### (8) Node N7 discovery

Then, the node N7 is discovered through the node search. The hierarchized logical route generator 114 determines that the node N7 is the non-tunnel NW function based on the information of the tunnel function list table 122.

Thus, the hierarchized logical route generator 114 may determine that the node N7 is a node constituting the route #1 of the current layer level L=1 and may attach the node N7 into the route #1 of the layer #1 (corresponding to Processing S135 in FIG. 15).
- Current layer level L: 1
- Route #1 of layer #0: [N1, N2]
- Route #1 of layer #1: [N2, N3, N4, N6, N7]
- Route #1 of layer #2: [N4, N5, N6]

### (9) Node N8 discovery

Then, the node N8 is discovered through the node search. The hierarchized logical route generator 114 determines that the node N8 is the tunnel function (termination) based on the information of the tunnel function list table 122.

Thus, the hierarchized logical route generator 114 may determine that the node N8 is a node constituting the route #1 of the current layer level L=1 and may attach the node N8 into the route #1 of the layer #1 (corresponding to Processing S139 in FIG. 15).

The hierarchized logical route generator 114 may determine that the node N8 is a node constituting the route #1 of the higher layer #0 in which the current layer level L=1 is changed by "-1" and may attach the node N8 into the route #1 of the layer #0 (corresponding to Processing S140 of FIG. 15).
- Current layer level L: 1-1=0
- Route #1 of layer #0: [N1, N2, N8]
- Route #1 of layer #1: [N2, N3, N4, N6, N7, N8]
- Route #1 of layer #2: [N4, N5, N6]

### (10) Node N9 discovery

Then, the node N9 is discovered through the node search. The hierarchized logical route generator 114 determines that the node N9 is the non-tunnel NW function based on the information of the tunnel function list table 122.

Thus, the hierarchized logical route generator 114 may determine that the node N9 is a node constituting the route #1 of the current layer level L=0 and may attach the node N9 into the route #1 of the layer #0 (corresponding to Processing S135 in FIG. 15).
- Current layer level L: 0
- Route #1 of layer #0: [N1, N2, N8, N9]
- Route #1 of layer #1: [N2, N3, N4, N6, N7, N8]
- Route #1 of layer #2: [N4, N5, N6]

### (11) Node N10 discovery

Then, the node N10 is discovered through the node search. The hierarchized logical route generator 114 determines that the node N10 is the tunnel function (generation) based on the information of the tunnel function list table 122.

Thus, the hierarchized logical route generator 114 may determine that the node N10 is a node constituting the route #1 of the current layer level L=0 and may attach the node N10 into the route #1 of the layer #0 (corresponding to Processing S139 in FIG. 15).

The hierarchized logical route generator 114 may determine that the node N10 is a node constituting the lower layer #1 in which the current layer level L=0 is changed by"+1." Base on the determination, the hierarchized logical route generator 114 may generate a new route #2 of the layer #1 and may attach the node N10 into the route #2 of the layer #1 (corresponding to Processing S140 in FIG. 15).
- Current layer level L: 0+1=1
- Route #1 of layer #0: [N1, N2, N8, N9, N10]
- Route #1 of layer #1: [N2, N3, N4, N6, N7, N8]
- Route #1 of layer #2: [N4, N5, N6]
- Route #2 of layer #1: [N10]

### (12) Node N11 discovery

Then, the node N11 is discovered through the node search. The hierarchized logical route generator 114 determines that the node N11 is the non-tunnel NW function based on the information of the tunnel function list table 122.

Thus, the hierarchized logical route generator 114 may determine that the node N11 is a node constituting the route #2 of the current layer level L=1 and may attach the node N11 into the route #2 of the layer #1 (corresponding to Processing S135 in FIG. 15).
- Current layer level L: 1
- Route #1 of layer #0: [N1, N2, N8, N9, N10]
- Route #1 of layer #1: [N2, N3, N4, N6, N7, N8]
- Route #1 of layer #2: [N4, N5, N6]
- Layer #1 transfer route 2: [N10, N11]

### (13) Node N12 discovery

Then, the node N12 is discovered through the node search. The hierarchized logical route generator 114 determines that the node N12 is the tunnel function (termination) based on the information of the tunnel function list table 122.

Thus, the hierarchized logical route generator 114 may determine that the node N12 is a node constituting the route #2 of the current layer level L=1 and may attach the node N12 into the route #2 of the layer #1 (corresponding to Processing S139 in FIG. 15).

The hierarchized logical route generator 114 may determine that the node N12 is a node constituting the route #1 of the higher layer #0 in which the current layer level L=1 is changed by "-1" and may attach the node N12 into the route #1 of the layer #0 (corresponding to Processing S140 in FIG. 15).
- Current layer level L: 1-1=0
- Route #1 of layer #0: [N1, N2, N8, N9, N10, N12]
- Route #1 of layer #1: [N2, N3, N4, N6, N7, N8]
- Route #1 of layer #2: [N4, N5, N6]
- Route #2 of layer #1: [N10, N11, N12]

### (14) Node N13 discovery

Then, the node N13 is discovered through the node search. The hierarchized logical route generator 114 determines that the node N13 is the non-tunnel NW function based on the information of the tunnel function list table 122.

Thus, the hierarchized logical route generator 114 may determine that the node N13 is a node constituting the route #1 of the current layer level L=0 and may attach the node N13 into the route #1 of the layer #0 (corresponding to Processing S135 in FIG. 15).
- Current layer level L: 0
- Route #1 of layer #0: [N1, N2, N8, N9, N10, N12, N13]
- Route #1 of layer #1: [N2, N3, N4, N6, N7, N8]
- Route #1 of layer #2: [N4, N5, N6]
- Route #2 of layer #1: [N10, N11, N12]

### (15) End

Since the destination node Z is searched through the node search, all the nodes Nx in the data transfer route are searched (NO is determined in Processing S133 in FIG. 15). Thus, the hierarchized logical route generator 114 may end the process of generating the hierarchized logical route information.

Through the above process, for the exemplary node arrangement of FIG. 14, information of the following four hierarchized logical routes is finally generated in the management server 11. The generated hierarchized logical route information may be, for example, stored in the storage unit 210 (see FIG. 12).
1. Route #1 of layer #0: [N1, N2, N8, N9, N10, N12, N13]
2. Route #1 of layer #1: [N2, N3, N4, N6, N7, N8]
3. Route #1 of layer #2: [N4, N5, N6]
4. Route #2 of layer #1: [N10, N11, N12]

### (Example of process of generating route information)

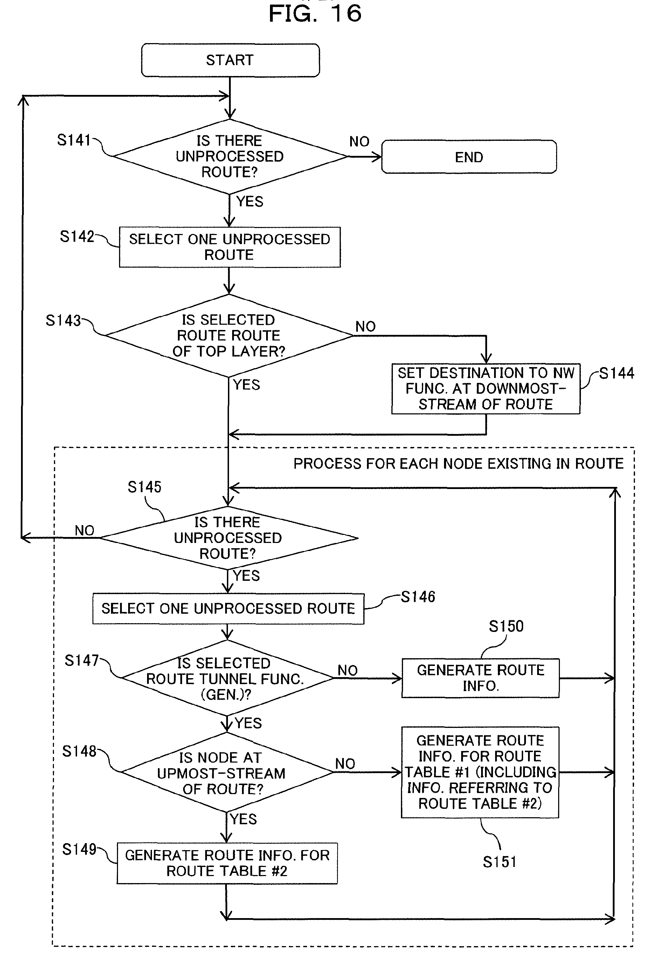

Next, a process in which in Processing S14 of generating the route information in FIG. 13, the route information generator 115 generates the route information through based on the hierarchized logical route information generated as described above will be described with reference to a flowchart of FIG. 16.

All of the nodes N2, N4, N6, N8, N10, and N12 serving as the tunnel function are assumed to be classified into the NW function of Type 1. The other nodes N1, N3, N5, N7, N9, and N11 are assumed to be classified into the NW function of Type 1 as well. However, the above assumption is made for the sake of convenience of description, and the node Nx may correspond to any one of the NW functions of Type 1 to Type 4.

The route information generator 115 checks whether or not there is an unprocessed route that does not generate the route information among the four hierarchized logical routes (Processing S141).

When there is an unprocessed route (YES in Processing S141), the route information generator 115 selects any one unprocessed route (Processing S142). For example, the route information generator 115 selects the route #1 of the layer #0: [N1, N2, N8, N9, N10, N12, N13].

The route information generator 115 checks whether or not the selected route is a route positioned at the top layer #0 (Processing S143). Since the route #1 of the layer #0 is a route positioned at the top layer, YES is determined in Processing S143.

Thus, the route information generator 115 checks whether or not there is an unprocessed node Nx that does not generate the route information in the route #1 of the layer #0 (Processing S145). In this step, since the route information is not generated for any of the nodes Nx, YES is determined in Processing S145.

For this reason, the route information generator 115 selects any one of the node Nx (x=1, 2, 8, 9, 10, 12, or 13) in the route #1 of the layer #0 (Processing S146).

Then, the route information generator 115 checks whether or not the selected node Nx is the tunnel function (generation) based on the information of the tunnel function list table 122 (Processing S147).

When the selected node Nx is not the tunnel function (generation) (NO in Processing S147, the route information generator 115 may generate the route information set to the node Nx, similarly to the "node search route information generation method" described above (Processing S150).

For example, when the node N1, N8, N9, N12, or N13 in the route #1 of the layer #0 is selected, the route information may be generated, similarly to the "node search route information generation method."

On the other hand, when the selected node Nx is the tunnel function (generation) (YES in Processing S147), the route information generator 115 checks whether or not the node Nx is a node positioned at the most upstream side of the selected route #1 of the layer #0 (Processing S148).

For example, when the node N2 or N10 serving as the tunnel function (generation) is selected, the node positioned at the most upstream side in Since the node positioned at the most upstream side in the route #1 of the layer #0 is the node N1, NO is determined in Processing S148.

Based on the determination, the route information generator 115 may generate the route information of the route table #1 set to the node N2 or N10 (Processing S151).

For example, the route information generator 115 may generate the route information in which the address A of the source node A is set as the source address, and the address Z of the destination node Z is set as the destination address as the route table #1 set to the node N2 or N10.

Information indicating that the route table #2 for the tunnel section is referred to for a pair of a source address S1 and a destination address D1 in the route table #1 may be set (Processing S151). The route information of the route table #2 is generated in Processing S149 which will be described later when the route #1 of the lower layer #1 into which the tunnel function (generation) N2 or N10 is attached is selected as an unprocessed route in Processing S142.

Thus, the route information generator 115 can generate, for example, the route information of the two appropriate route tables #1 and #2 illustrated in FIG. 8 for the node Nx serving as the tunnel function (generation).

On the other hand, when the selected node Nx is the tunnel function (generation) positioned at the most upstream side of the selected route #1 of the layer #0 (YES in Processing S148), the route information generator 115 may generate the route information of the route table #2 (Processing S149).

The route information of the route table #2 may be generated, similarly to the "node search route information generation method." Since there is no tunnel function (generation) positioned at the most upstream side in the route #1 of the layer #0 in the example of FIG. 14, the route information of the route table #2 for the route #1 of the layer #0 is not generated.

The route information generator 115 repeats the selection of one unprocessed node Nx and the generation of the route information by repeatedly performing Processing S145 to S151 until there is no unprocessed node Nx in the selected route #1 of the layer #0 (until NO is determined in Processing S145).

When there is no unprocessed node Nx in the selected route #1 of the layer #0 (NO in Processing S145), the route information generator 115 returns to Processing S141 and checks whether or not there is an unprocessed route.

When there is an unprocessed route (YES in Processing S141), the route information generator 115 selects any one unprocessed route (Processing S142). For example, the route information generator 115 selects the route #1 of the layer #1: [N2, N3, N4, N6, N7, N8].

The route information generator 115 checks whether or not the selected route is a route positioned at the top layer #0 (Processing S143). Since the route #1 of the layer #1 is not the route positioned in the top layer, NO is determined in Processing S143.

The route information generator 115 may set the node N2 positioned at the most upstream side in the selected route #1 of the layer #1 as the source node, set the node N8 positioned at the most downstream side as the destination node (Processing S144), and perform Processing S145 to S151.

In other words, the route information generator 115 may generate the route information of the node Nx in the route #1 of the layer #1 by applying the "node search route information generation method" to the route #1 of the layer #1 from the source node N2 to the destination node N8.

However, since the node N4 is not the tunnel function (generation) positioned the most upstream side of the selected route #1 of the layer #1, the route information generator 115 generates the route information of the route table #1 for the node N4 in Processing S151.

For example, the route information generator 115 may generate the route information in which the address P2 of the node N2 is set as the source address, and the address P8 of the node N8 is set as the destination address as the route information of the route table #1 of the node N4. Information indicating that the route table #2 for the tunnel section is referred to for a pair of the address P2 and the address P8 in the route table #1 may be set.

The route information for the route table #2 of the node N4 is generated in Processing S149 when the route #1 of the lower layer #2 into which the node N4 is attached is selected as an unprocessed route in Processing S142.

Since the node N2 serving as the tunnel function (generation) is positioned at the most upstream side in the selected route #1 of the layer #1, the route information generator 115 may generate the route information for the route table #2 of the node N2 in Processing S149. The route information for the route table #2 may be generated, similarly to the "node search route information generation method."

For example, the route information in which the address P2 of the node N2 is set as the source address, and the address P8 of the node N8 is set as the destination address may be generated as the route information for the route table #2 of the node N2. In the route table #2, the address P3 of the node N3 may be set as the next hop address for the pair of the source address P2 and the destination address P8.

The route information generator 115 repeats the selection of one unprocessed node Nx and the generation of the route information by repeatedly performing Processing Steps S145 to S151 until there is no unprocessed node Nx in the selected route #1 of the layer #1 (until NO is determined in Processing S145).

When there is no unprocessed node Nx in the selected route #1 of the layer #1 (NO in Processing S145), the route information generator 115 returns to Processing S141 and checks whether or not there is an unprocessed route.

When there is an unprocessed route (YES in Processing S141), the route information generator 115 selects any one unprocessed route (Processing S142). For example, the route information generator 115 selects the route #1 of the layer #2: [N4, N5, N6].

The route information generator 115 checks whether or not the selected route is a route positioned at the top layer #0 (Processing S143). Since the route #1 of the layer #2 is not the route positioned in the top layer, NO is determined in Processing S143.

The route information generator 115 may set the node N4 positioned at the most upstream side in the selected route #1 of the layer #2 as the source node, set the node N6 positioned at the most downstream side as the destination node (Processing S144) and perform Processing S145 to S151 in FIG. 16.

In other words, the route information generator 115 may generate the route information of the node Nx in the route #1 of the layer #2 by applying the "node search route information generation method" to the route #1 of the layer #2 from the source node N4 to the destination node N6.

However, since the node N4 serving as the tunnel function (generation) is positioned at the most upstream side in the selected route #1 of the layer #2, the route information generator 115 may generate the route information for the route table #2 of the node N4 in Processing S149. The route information for the route table #2 may be generated, similarly to the "node search route information generation method."

For example, the route information in which the address P4 of the node N4 is set as the source address, and the address P6 of the node N6 is set as the destination address may be generated as the route information for the route table #2 of the node N4. In the route table #2, the address P5 of the node N5 may be set as the next hop address for a pair of the source address P4 and the destination address P6.

The route information generator 115 repeats the selection of one unprocessed node Nx and the generation of the route information by repeatedly performing Processing S145 to S151 until there is no unprocessed node Nx in the selected route #1 of the layer #2 (until NO is determined in Processing S145).

When there is no unprocessed node Nx in the selected route #1 of the layer #2 (NO in Processing S145), the route information generator 115 returns to Processing S141 and checks whether or not there is an unprocessed route.

When there is an unprocessed route (YES in Processing S141), the route information generator 115 selects any one unprocessed route (Processing S142). For example, the route information generator 115 selects the route #2 of the layer #1: [N10, N11, N12].

The route information generator 115 checks whether or not the selected route is a route positioned at the top layer #0 (Processing S143)). Since the route #2 of the layer #1 is not the route positioned in the top layer, NO is determined in Processing S143.

The route information generator 115 may set the node N10 positioned at the most upstream side in the selected route #2 of the layer #1 as the source node, set the node N12 positioned at the most downstream side as the destination node (Processing S144) and perform Processing S145 to S151 of FIG. 16.

In other words, the route information generator 115 may generate the route information of the node Nx in the route #2 of the layer #1 by applying the "node search route information generation method" to the route #2 of the layer #1 from the source node N10 to the destination node N12.

However, since the node N10 serving as the tunnel function (generation) is positioned at the most upstream side in the selected route #2 of the layer #1, the route information generator 115 may generate the route information for the route table #2 of the node N10 in Processing S149. The route information for the route table #2 may be generated, similarly to the "node search route information generation method."

For example, the route information in which the address P10 of the node N10 is set as the source address, and the address P12 of the node N12 is set as the destination address may be generated as the route information for the route table #2 of the node N10. In the route table #2, the address P11 of the node N11 may be set as the next hop address for a pair of the source address P10 and the destination address P12.

The route information generator 115 repeats the selection of one unprocessed node Nx and the generation of the route information by repeatedly performing Processing Steps S145 to S151 until there is no unprocessed node Nx in the selected route #2 of the layer #1 (until NO is determined in Processing S145).

When there is no unprocessed node Nx in the selected route #2 of the layer #1 (NO in Processing S145), the route information generator 115 returns to Processing S141 and checks whether or not there is an unprocessed route.

In the above example, when the process on the route #2 of the layer #1 ends, there is no unprocessed route (NO in Processing S141), the route information generator 115 may end the process of generating the route information.

As described above, the route information generator 115 generates the route information according to each hierarchized the logical route for each tunnel section in the data transfer route. Thus, the management server 11 can generate the appropriate route information for individual tunnel sections and generate the appropriate route information even for the node Nx positioned in the tunnel section.

The above example is a process example for the route from the direction from the source node A to the destination node Z (also referred to as an "outward path"). The same process as the above-described process may be applied even to the route from the destination node Z to the source node A (also referred to as a "return path").

For example, in the process for the return path, the "tunnel function (generation)" and the "tunnel function (termination)" in the process for the outward path are replaced with the "tunnel function (termination)" and the "tunnel function (generation)." Thus, the management server 11 can generate and set the appropriate route information even for the return path, similarly to the outward path.

As described above, according to the above embodiment, even when there is the tunnel section formed by the tunnel function such as the VPN in the service chain, the management server 11 can perform an appropriate route setting on the tunnel section.

### (Second embodiment)

In the NFV, the network service provider can provide a service according to the NW function by arranging the NW functions constituting the service chain in a data center managed by the provider through the management server 11.

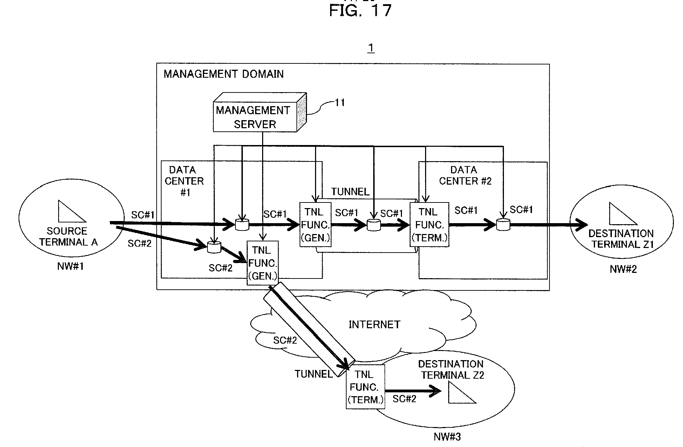

The first embodiment has been described in connection with the example in which there are a pair of the tunnel function (generation) and the tunnel function (termination) in the service chain for which the management server 11 performs the routing setting. When this example is considered as an application example of the NFV, it corresponds to a form in which a plurality of data centers #1 and #2 that can be managed or controlled by the management server 11 are tunnel-connected to each other as schematically illustrated in FIG. 17.

For example, a service chain SC#1 is set through the data centers #1 and #2 distributed to a plurality of areas in a route from a source node A belonging to a network #1 to a destination node Z1 belonging to a network #2.

For a tunnel connection between the data centers #1 and #2, the tunnel function is arranged in each of the data centers #1 and #2. For example, the tunnel function (generation) is arranged in the data center #1, and the tunnel function (termination) is arranged in the data center #2.

Here, a range of the service chain for which the routing setting can be performed by the management server 11 is referred to as a "management domain" for the sake of convenience. In the case of the data transfer route in the management domain, the management server 11 can generate and set the route information of the node (the NW function or the relay node) in the data transfer route as described in the first embodiment.

For example, in the service chain SC#1 of FIG. 17, both the tunnel function (generation) and the tunnel function (termination) belong to the management domain of the management server 11. Thus, the management server 11 can generate and set the route information for both the tunnel function (generation) and the tunnel function (termination).

On the other hand, a case in which tunnel generation function is arranged in the management domain, and the tunnel termination function is arranged outside the management domain as in a service chain SC#2 illustrated in FIG. 17 may occur as the NFV spreads.

For example, the service chain SC#2 is set as a route from the source node A to a destination node Z2 belonging to a network #3 via the data center #1 and the Internet.

Further, a tunnel is set and formed, for example, in a section routed through the Internet between the data center #1 and the network #3. Thus, the tunnel function (generation) is arranged in the data center #1, and the tunnel function (termination) is arranged in the network #3.

In this case, it is hard for the management server 11 to generate the appropriate route information for the service chain SC#2 in which only the tunnel function (generation) exists in the management domain using the operation according to the first embodiment.

In this regard, in a second embodiment, the appropriate route information can be generated for the service chain SC#2 in which only one of a pair of tunnel functions exists in the management domain as well as the service chain SC#1 in which both of a pair of tunnel functions exist in the management domain. Thus, it is possible to support an appropriate route setting for both of the service chains SC#1 and SC#2 through the management server 11.

When only one of the tunnel functions exists in the management domain, the management server 11 prepares additional information compared to when both of the tunnel functions exist in the management domain (the first embodiment). Examples of the additional information include information of the other tunnel function existing outside the management domain and information for transferring data to a node outside the management domain.

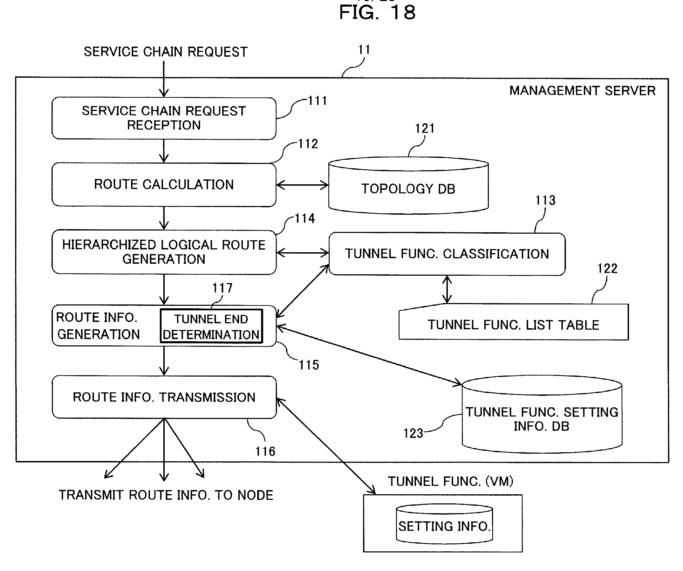

The management server 11 of the second embodiment may additionally include a tunnel end determiner 117 capable of determining whether both of a pair of tunnel functions exist in the management domain or only one tunnel function exists in the management domain, for example, as illustrated in FIG. 18.

For example, the tunnel end determiner 117 may be provided as a function of the route information generator 115 or may be provided as a function separated from the route information generator 115. In FIG. 18, blocks denoted by the same reference numerals as in FIG. 11 are the blocks described in the first embodiment or the same blocks as in the first embodiment. An exemplary hardware configuration of the management server 11 may be the same as or similar to the configuration illustrated in FIG. 12.

Based on a determination result by the tunnel end determiner 117, the route information generator 115 acquires the additional information and generates the appropriate route information using as few information as possible.

For example, when both of the tunnel function (generation) and the tunnel function (termination) exist at both ends of a route provided from the hierarchized logical route generator 114, the tunnel end determiner 117 may determine that both ends of the tunnel exist in the management domain.

On the other hand, when the tunnel function (generation) or the tunnel function (termination) exists only one end of the route provided from the hierarchized logical route generator 114, the tunnel end determiner 117 may determine that only one end of the tunnel exists in the management domain.

The route information generator 115 may operate as follows based on the determination result by the tunnel end determiner 117. For example, when the tunnel end determiner 117 determines that both of the tunnel functions exist in the route that is not positioned in the top layer #0, the route information generator 115 may generate the route information, similarly to the first embodiment.

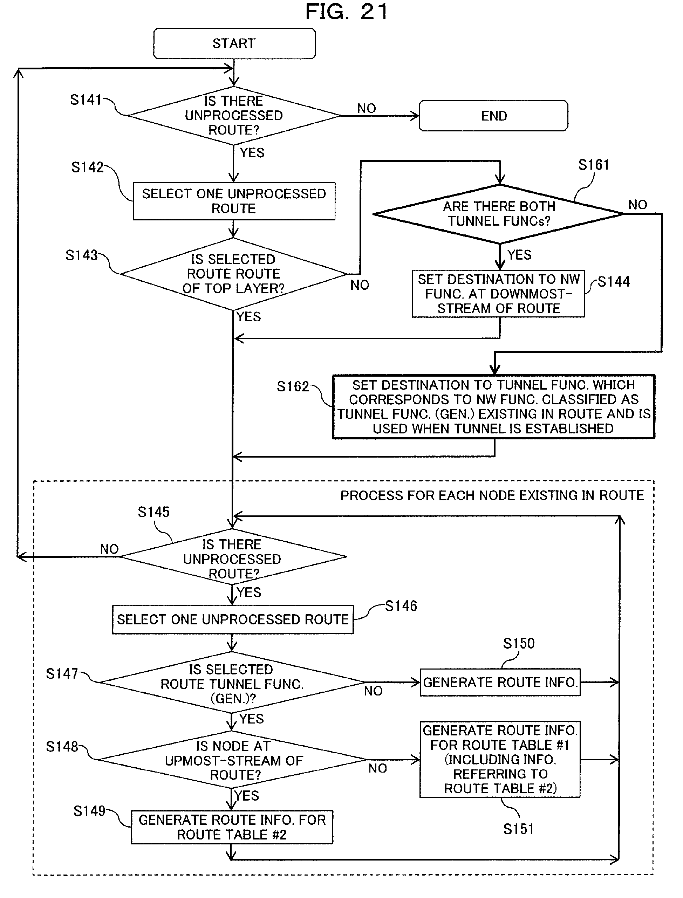

This operation corresponds to, for example, the operation in which YES is determined in Processing S161 in FIG. 21, and Processing Steps S144 to S151 are performed. A flowchart illustrated in FIG. 21 corresponds to the flowchart illustrated in FIG. 16. The flowchart of FIG. 21 differs from that of FIG. 16 in that Processing S161 and S162 are added.

On the other hand, when only one tunnel function exists in the route, the route information generator 115 may set a destination of the route set to the NW function to an opposite tunnel function that corresponds to the NW function classified as the tunnel function (generation) existing in the route and is used when the tunnel is established. This operation corresponds to, for example, the operation in which NO is determined in Processing S161 in FIG. 21, and Processing S162 is performed.

After Processing S162, similarly to the first embodiment, the route information generator 115 may generate the route information set to the node Nx by repeatedly performing Processing Steps S144 to S151 until there is no unprocessed node Nx in the selected route. However, an address of a node positioned outside the management domain may be set as the next hop address of the route information set to the node Nx positioned at the most downstream side of the route.

### (Operation example)

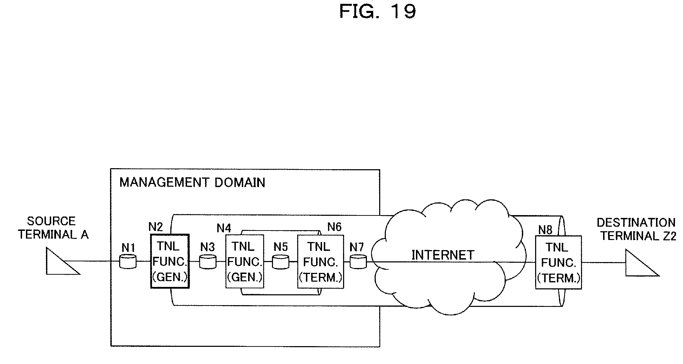

A service chain illustrated in FIG. 19 will be described as an example of setting the service chain in which only one tunnel function exists in the management domain. In the example of FIG. 19, 8 nodes N1 to N8 exist in a route from a source node A to a destination node Z2. The nodes N1 to N7 are positioned in the management domain of the management server 11, and the node N8 is positioned outside the management domain of the management server.

For example, a section of a tunnel #1 routed through the Internet is set between the node N2 and the node N8. For example, the node N2 corresponds to the tunnel function (generation) in the management domain, and the node N8 corresponds to the tunnel function (termination) outside the management domain.

In the section of the tunnel #1, a section of another tunnel #2 is set between the node N4 and the node N6. For example, the nodes N4 and N6 correspond to the tunnel function (generation) and the tunnel function (termination) in the management domain.

A route of the section of the tunnel #1 is a route in which only one of a pair of tunnel functions exists in the management domain, and a route of the section of the tunnel #2 is a route in which both of a pair of tunnel functions exist in the management domain.

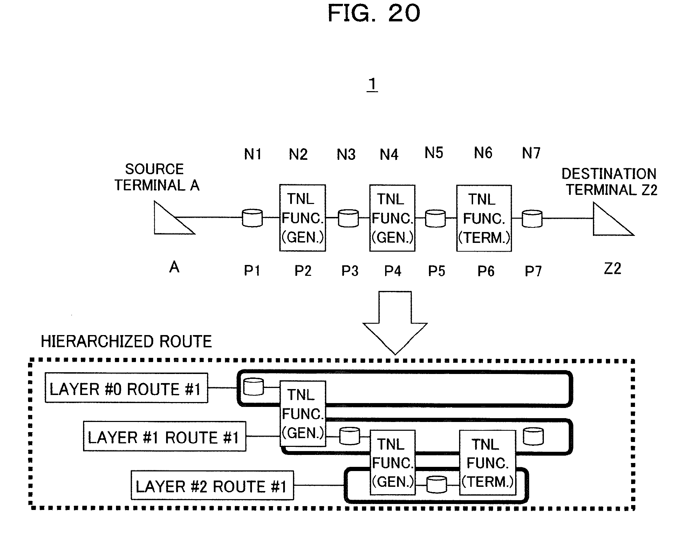

For a node arrangement illustrated in FIG. 19, the hierarchized logical route generator 114 performs the same operation as the first embodiment (for example, Processing Steps S131 to S140 in FIG. 15) in Processing S13 in FIG. 13, information of the following three hierarchized routes is generated as illustrated in FIG. 20.
1. Route #1 of layer #0: [N1, N2]
2. Route #1 of layer #1: [N2, N3, N4, N6, N7]
3. Route #1 of layer #2: [N4, N5, N6]

Each of the tunnel functions N2, N4, and N6 positioned in the management domain is assumed to be classified into the NW function of Type 1. The other nodes N1, N3, N5, and N7 positioned in the management domain are assumed to be classified into the NW function of Type 1 as well.

The management server 11 generates the route information for the three routes generated by the hierarchized logical route generator 114 through the route information generator 115. For example, the management server 11 generates the route information set to the node Nx existing in each of the hierarchized logical routes by performing the process illustrated in the flowchart of FIG. 21 in Processing S14 in FIG. 13.

For example, the route information generator 115 checks whether or not there is an unprocessed route that does not generate the route information among the three hierarchized logical routes (Processing S141).

When there is an unprocessed route (YES in Processing S141), the route information generator 115 selects any one unprocessed route (Processing S142). For example, the route information generator 115 selects the route #1 of the layer #0: [N1, N2].

The route information generator 115 checks whether or not the selected route is a route positioned at the top layer #0 (Processing S143)). Since the route #1 of the layer #0 is a route positioned at the top layer, YES is determined in Processing S143.

Thus, the route information generator 115 checks whether or not there is an unprocessed node Nx that does not generate the route information in the route #1 of the layer #0 (Processing S145). In this step, since the route information is not generated for any of the nodes Nx, YES is determined in Processing S145.

For this reason, the route information generator 115 selects any one of the node Nx (x=1 or 2) in the route #1 of the layer #0 (Processing S146).

Then, the route information generator 115 checks whether or not the selected node Nx is the tunnel function (generation) based on the information of the tunnel function list table 122 (Processing S147).

When the selected node Nx is not the tunnel function (generation) (NO in Processing S147, the route information generator 115 may generate the route information set to the node Nx, similarly to the "node search route information generation method" described above (Processing S150). For example, when the node N1 in the route #1 of the layer #0 is selected, the route information may be generated, similarly to the "node search route information generation method."

On the other hand, when the selected node Nx is the tunnel function (generation) (YES in Processing S147), the route information generator 115 checks whether or not the node Nx is a node positioned at the most upstream side of the selected route #1 of the layer #0 (Processing S148).

For example, when the node N2 serving as the tunnel function (generation) is selected, the node positioned at the most upstream side in Since the node positioned at the most upstream side in the route #1 of the layer #0 is the node N1, NO is determined in Processing S148.

Based on the determination, the route information generator 115 may generate the route information of the route table #1 set to the node N2 (Processing S151).

For example, the route information generator 115 may generate the route information in which the address A of the source node A is set as the source address, and the address Z2 of the destination node Z2 is set as the destination address as the route table #1.

Information indicating that the route table #2 is referred to for a pair of a source address A and a destination address Z2 in the route table #1 may be set (Processing S151). The route information of the route table #2 is generated in Processing S149 when the route #1 of the lower layer #1 into which the tunnel function (generation) N2 is attached is selected as an unprocessed route in Processing S142.

On the other hand, when the selected node Nx is the tunnel function (generation) positioned at the most upstream side of the selected route #1 of the layer #0 (YES in Processing S148), the route information generator 115 may generate the route information of the route table #2 (Processing S149).

The route information of the route table #2 may be generated, similarly to the "node search route information generation method." Since there is no tunnel function (generation) positioned at the most upstream side in the route #1 of the layer #0 in the example of FIG. 20, the route information of the route table #2 for the route #1 of the layer #0 is not generated.

The route information generator 115 repeats the selection of one unprocessed node Nx and the generation of the route information by repeatedly performing Processing Steps S145 to S151 until there is no unprocessed node Nx in the selected route #1 of the layer #0 (until NO is determined in Processing S145).

When there is no unprocessed node Nx in the selected route #1 of the layer #0 (NO in Processing S145), the route information generator 115 returns to Processing S141 and checks whether or not there is an unprocessed route.

When there is an unprocessed route (YES in Processing S141), the route information generator 115 selects any one unprocessed route (Processing S142). For example, the route information generator 115 selects the route #1 of the layer #1: [N2, N3, N4, N6, N7].

The route information generator 115 checks whether or not the selected route is a route positioned at the top layer #0 (Processing S143). Since the route #1 of the layer #1 is not the route positioned in the top layer, NO is determined in Processing S143.

In this case, the management server 11 may determine whether or not both of the pair of the tunnel function (generation) and the tunnel function (termination) exist in the selected route #1 of the layer #1, for example, through the tunnel end determiner 117 (Processing S161).

In the example of FIG. 20, since only one tunnel function (generation) N2 exists in the route #1 of the layer #1, the tunnel end determiner 117 may determine that only one of both ends of the tunnel exists in the management domain of the management server 11 (NO in Processing S161).

Thus, the route information generator 115 may set the address P8 of the opposite tunnel function N8 that corresponds to the NW function N2 classified as the tunnel function (generation) and is used when the tunnel is established as the destination address of the route information set to the node Nx in the route #1 of the layer #1.

Here, for example, the address information of the opposite tunnel function N8 may be acquired through one of the following two methods (a1) and (a2).

### (a1) Acquisition from tunnel function setting information DB 123 (see FIG. 11)

When the management server 11 undertakes the process of accessing the tunnel function and forming the tunnel, the address information of the opposite tunnel function (termination) available to terminate the tunnel is included in the setting information for the tunnel function (generation).

Thus, when the setting information for the tunnel function (generation) is stored in the tunnel function setting information DB 123, the route information generator 115 may use the address information of the opposite tunnel function (termination) stored in the DB 123 for generation of the route information.

### (a2) Acquisition by accessing setting information stored in VM of tunnel function (see FIG. 11)

The setting information stored in the VM of the tunnel function refers to, for example, setting information stored in the VM as a configuration file or information related to the tunnel function obtained as a result of executing a command for acquiring information related to a tunnel.

Examples of the setting information stored in the VM of the tunnel function may include a tunnel identifier, a tunnel encryption type, an encryption key, and address information of an opposite tunnel function available to terminate a tunnel.

Even when the management server 11 does not undertake the process of forming the tunnel, the route information generator 115 is available to access the VM in which the tunnel function operates and acquire the address information of the opposite tunnel function available to terminate the tunnel from the setting information stored in the VM.

The route information generator 115 may set the node N2 positioned at the most upstream side in the selected route #1 of the layer #1 as the source node, set the opposite tunnel function N8 as the destination node (Processing S162), and perform the same Processing Steps S145 to S151 as in the first embodiment.

In other words, the route information generator 115 may generate the route information of the node Nx in the route #1 of the layer #1 by applying the "node search route information generation method" to the route #1 of the layer #1 from the source node N2 to the opposite tunnel function N8.

However, since the node N4 is not the tunnel function (generation) positioned the most upstream side of the selected route #1 of the layer #1, the route information generator 115 generates the route information of the route table #1 for the node N4 in Processing S151.

For example, the route information generator 115 may generate the route information in which the address P2 of the node N2 is set as the source address, and the address P8 of the opposite tunnel function N8 is set as the destination address as the route information of the route table #1 of the node N4. Information indicating that the route table #2 is referred to for a pair of the address P2 and the address P8 in the route table #1 may be set.

The route information for the route table #2 of the node N4 is generated in Processing S149 when the route #1 of the lower layer #2 into which the node N4 is attached is selected as an unprocessed route in Processing S142.

Since the node N2 serving as the tunnel function (generation) is positioned at the most upstream side in the selected route #1 of the layer #1, the route information generator 115 may generate the route information for the route table #2 of the node N2 in Processing S149. The route information for the route table #2 may be generated, similarly to the "node search route information generation method."

For example, the route information in which the address P2 of the node N2 is set as the source address, and the address P8 of the opposite tunnel function N8 is set as the destination address may be generated as the route information for the route table #2 of the node N2. In the route table #2, the address P3 of the node N3 may be set as the next hop address for the pair of the source address P2 and the destination address P8.

In the selected route #1 of the layer #1, an address of the node positioned outside the management domain may be set as the next hop address in the route information set to the node N7 positioned at the most downstream side.

The address information of the node positioned outside the management domain may be included, for example, in the service chain request received by the service chain request receiver 111 (see FIG. 11) as the additional information.

Alternatively, the address information of the node positioned outside the management domain may be provided to the management server 11 as the setting information, for example, through the input device 50, for example, when the management server 11 is activated.

As the node Nx constituting the service chain operates a routing protocol to generate the route information autonomously, the management server 11 (for example, the route information generator 115) may be unnecessary to acquire the address information of the node positioned outside the management domain.

In this case, the management server 11 is unnecessary to generate the route information set to the node Nx that operates the routing protocol. Further, when the node Nx that operates the routing protocol is the tunnel function (generation), the management server 11 may be unnecessary to generate the route information for the route table #2 for the tunnel function (generation).

When there is no unprocessed node Nx in the selected route #1 of the layer #1 (NO in Processing S145), the route information generator 115 returns to Processing S141 and checks whether or not there is an unprocessed route.

When there is an unprocessed route (YES in Processing S141), the route information generator 115 selects any one unprocessed route (Processing S142). For example, the route information generator 115 selects the route #1 of the layer #2: [N4, N5, N6].

The route information generator 115 checks whether or not the selected route is a route positioned at the top layer #0 (Processing S143). Since the route #1 of the layer #2 is not the route positioned in the top layer, NO is determined in Processing S143.

In this case, the management server 11 may determine whether or not both of the pair of the tunnel function (generation) and the tunnel function (termination) exist in the selected route #1 of the layer #2, for example, through the tunnel end determiner 117 (Processing S161).

In the example of FIG. 20, since both of the tunnel function (generation) N4 and the tunnel function (termination) N6 exist in the route #1 of the layer #2, the tunnel end determiner 117 may determine that both of both ends of the tunnel exist in the management domain of the management server 11 (YES in Processing S161).

Thus, the route information generator 115 may set the node N4 positioned at the most upstream side in the selected route #1 of the layer #2 as the source node, and set the node N6 positioned at the most downstream side as the destination node (Processing S144), similarly to the first embodiment. Thereafter, the route information generator 115 may performs Processing Steps S145 to S151, similarly to the first embodiment.

The route information generator 115 repeats the selection of one unprocessed node Nx and the generation of the route information by repeatedly performing Processing Steps S145 to S151 until there is no unprocessed node Nx in the selected route #1 of the layer #2 (until NO is determined in Processing S145).

When there is no unprocessed node Nx in the selected route #2 of the layer #1 (NO in Processing S145), the route information generator 115 returns to Processing S141 and checks whether or not there is an unprocessed route.

In the above example, when the process on the route #2 of the layer #1 ends, there is no unprocessed route (NO in Processing S141), the route information generator 115 may end the process of generating the route information.

### (Example of generating hierarchized logical route information for return path)

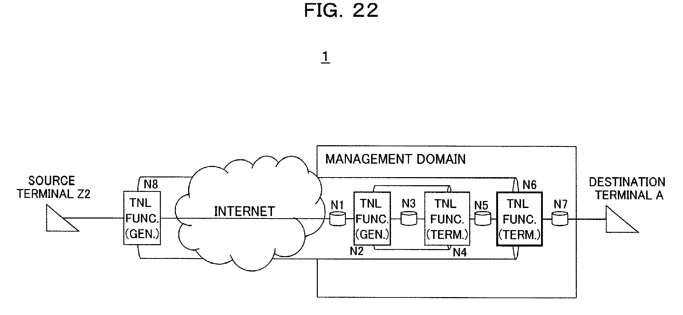

The example described above is an exemplary procedure for the data transfer route (the outward route) in the direction from the source node A to the destination node Z2. A node arrangement for the data transfer route (the return path) in the opposite direction from the destination node Z2 to the source node A is illustrated in FIG. 22.

FIG. 22 corresponds to a diagram in which the destination node Z2 of FIG. 19 is replaced with the source node, and the source node A of FIG. 19 is replaced with the destination node. In FIG. 22, nodes N1 to N7 positioned in the management domain correspond to the nodes N7 to N1 of FIG. 19, respectively. In FIG. 22, the return path with respect to the path illustrated in FIG. 19 is illustrated, and in FIG. 19 and FIG. 22, the relation between the tunnel function (generation) and the tunnel function (termination) is inverted.

For example, the tunnel functions (generation) N2 and N4 of the outward path in FIG. 19 correspond to the tunnel function (termination) N6 and N4 of the return path in FIG. 22. The tunnel functions (termination) N6 and N8 of the outward path in FIG. 19 correspond to the tunnel functions (generation) N2 and N8 of the return path in FIG. 22.

In the return path, the hierarchized logical route generator 114 changes the current layer level L by "-1" when the node discovered by the search is the tunnel function (termination). When there is no route of the layer level L-1, the hierarchized logical route generator 114 may generate a new route and attach the tunnel function (termination) discovered by the search into the route.

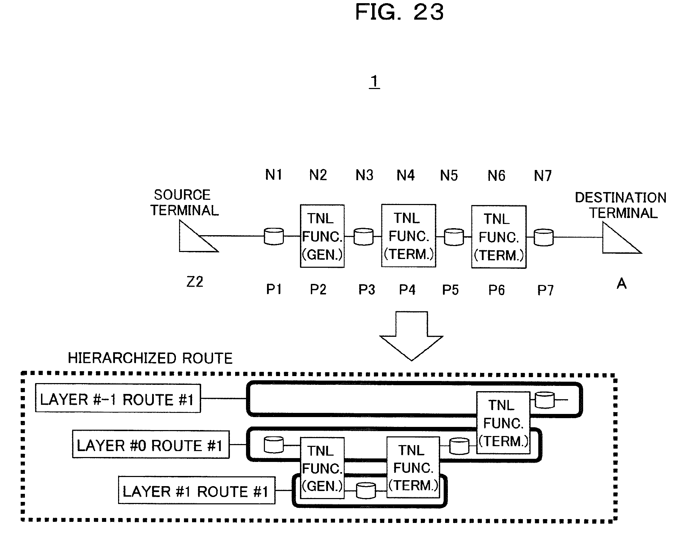

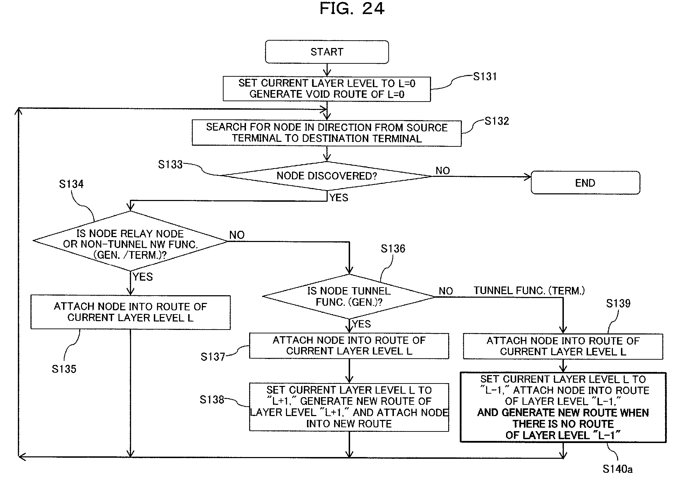

Next, an example of a process of generating the hierarchized logical route information illustrated in FIG. 23 through the hierarchized logical route generator 114 for the node arrangement of the return path illustrated in FIG. 22 will be described. FIG. 24 illustrates an example of a flowchart corresponding to this process.

FIG. 24 is a diagram corresponding to FIG. 15 of the first embodiment and differs from FIG. 15 in that Processing S140 is replaced with Processing S140a. Thus, in FIG. 24, Processing S131 to S139 excluding Processing S140a are the same as or similar to the process described above with reference to FIG. 15 unless otherwise set forth herein.

### (1) Start

The hierarchized logical route generator 114 sets the current layer level to L=0, and searches for the node Nx by sequentially tracking the data transfer route in the direction from the source node A to the destination node Z (corresponding to Processing Steps S131 and S132 in FIG. 24).
- Current layer level L: 0
- Route #1 of layer #0: []

### (2) Node N1 discovery

The node N1 is discovered through the node search. The hierarchized logical route generator 114 determines that the node N1 is the non-tunnel NW function based on the information of the tunnel function list table 122. Thus, the hierarchized logical route generator 114 determines that the node N1 is a node constituting the route #1 of the current layer level L=0, and attaches the node N1 into the route #1 of the layer #0 (corresponding to Processing S135 in FIG. 24).
- Current layer level L: 0
- Route #1 of layer #0: [N1]

### (3) Node N2 discovery

Then, the node N2 is discovered through the node search. The hierarchized logical route generator 114 determines that the node N2 is the tunnel function (generation) based on the information of the tunnel function list table 122.

Thus, the hierarchized logical route generator 114 may determine that the node N2 is a node constituting the route #1 of the current layer level L=0. Base on the determination, the hierarchized logical route generator 114 may attach the node N2 into the route #1 of the layer #0 (corresponding to Processing S137 in FIG. 24)

The hierarchized logical route generator 114 may determine that the node N2 is a node constituting the lower layer #1 in which the current layer level L is changed by"+1." Base on the determination, the hierarchized logical route generator 114 may generate a new route #1 of the layer #1 and attach the node N2 into the route #1 of the layer #1 (corresponding to Processing S138 in FIG. 24).
- Current layer level L: 0+1=1
- Route #1 of layer #0: [N1, N2]
- Route #1 of layer #1: [N2]

### (4) Node N3 discovery

Then, the node N3 is discovered through the node search. The hierarchized logical route generator 114 determines that the node N3 is the non-tunnel NW function based on the information of the tunnel function list table 122.

Thus, the hierarchized logical route generator 114 may determine that the node N3 is a node constituting the route #1 of the current layer level L=1, and may attach the node N3 into the route #1 of the layer #1 (corresponding to Processing S135 in FIG. 24).
- Current layer level L: 1
- Route #1 of layer #0: [N1, N2]
- Route #1 of layer #1: [N2, N3]

### (5) Node N4 discovery

Then, the node N4 is discovered through the node search. The hierarchized logical route generator 114 determines that the node N4 is the tunnel function (termination) based on the information of the tunnel function list table 122.

Thus, the hierarchized logical route generator 114 may determine that the node N4 is a node constituting the route #1 of the current layer level L=1 and may attach the node N4 into the route #1 of the layer #1 (corresponding to Processing S139 in FIG. 24)

The hierarchized logical route generator 114 may determine that the node N4 is a node constituting the higher layer #0 in which the current layer level L=1 is changed by "-1." Base on the determination, the hierarchized logical route generator 114 may attach the node N4 into the route #1 of the layer #0 (corresponding to Processing S140a in FIG. 24).
- Current layer level L: 1-1=0
- Route #1 of layer #0: [N1, N2, N4]
- Route #1 of layer #1: [N2, N3, N4]

### (6) Node N5 discovery

Then, the node N5 is discovered through the node search. The hierarchized logical route generator 114 determines that the node N5 is the non-tunnel NW function based on the information of the tunnel function list table 122.

Thus, the hierarchized logical route generator 114 may determine that the node N5 is a node constituting the route #1 of the current layer level L=0 and may attach the node N5 into the route #1 of the layer #0 (corresponding to Processing S135 in FIG. 24).
- Current layer level L: 0
- Transfer route 1 of layer 0: [N1, N2, N4, N5]
- Transfer route 1 of layer 1: [N2, N3, N4]

### (7) Node N6 discovery

Then, the node N6 is discovered through the node search. The hierarchized logical route generator 114 determines that the node N6 is the tunnel function (termination) based on the information of the tunnel function list table 122.

Thus, the hierarchized logical route generator 114 may determine that the node N6 is a node constituting the route #1 of the current layer level L=0 and may attach the node N6 into the route #1 of the layer #0 (corresponding to Processing S139 in FIG. 24).

The hierarchized logical route generator 114 determines that the node N6 is a node constituting the route of the higher layer #-1 in which the current layer level L=0 is changed by "-1." Here, since the route of the layer #-1 is not generated, the hierarchized logical route generator 114 may generates a new route #1 of the layer #-1 and may attach the node N6 into the route #1 of the layer #-1 (corresponding to Processing S140a in FIG. 24).
- Current layer level L: 0-1=-1
- Route #1 of layer #0: [N1, N2, N4, N5]
- Route #1 of layer #1: [N2, N3, N4]
- Route #1 of layer #-1: [N6]

### (8) Node N7 discovery

Then, the node N7 is discovered through the node search. The hierarchized logical route generator 114 determines that the node N7 is the non-tunnel NW function based on the information of the tunnel function list table 122.

Thus, the hierarchized logical route generator 114 may determine that the node N7 is a node constituting the route #1 of the current layer level L=-1 and may attach the node N7 into the route #1 of the layer #-1 (corresponding to Processing S135 in FIG. 24).
- Current layer level L: -1
- Route #1 of layer #0: [N1, N2, N4, N5]
- Route #1 of layer #1: [N2, N3, N4]
- Route #1 of layer #-1: [N6, N7]

As described above, the hierarchized logical route generator 114 can generate the hierarchized logical route information illustrated in FIG. 23 for the node arrangement (the return path) of the service chain illustrated in FIG. 22.

A process of generating the route information based on the hierarchized logical route information for the return path through the route information generator 115 is the same as the first embodiment (for example, see FIG. 16).

As described above, according to the second embodiment, even when only one of the tunnel generation function and the tunnel termination function exists in the management domain of the management server 11, it is possible to generate and set the appropriate route information for the tunnel section.

### (Modified example of second embodiment)

The second embodiment has been described in connection with the example in which the address of the opposite tunnel function is set as the destination address of the route information set to the node Nx in the route in which only one tunnel function exists, for example, in Processing S162 in FIG. 21.

As another method, in Processing S162, address information matching a transfer route of all data such as a default address may be set as the destination address of the route information set to the node Nx in the route in which only one tunnel function exists.

As a result, the management server 11 does not need to acquire the address information of the opposite tunnel function.

### (Third embodiment)

In the example, it is assumed that "tunnel nesting" in which another tunnel section is further set in a certain tunnel section can be set in the service chain.

Under an assumption that the "tunnel nesting" is not set in the service chain, the tunnel function may be registered in the tunnel function list table 122 with no classification of generation and termination.

For example, in the tunnel function list table 122, information is preferably registered according to a classification of the VPN device, the GRE tunnel device, and the Vx LAN tunnel device, and information of each device is unnecessary to be registered according to a classification of "ingress" and "egress" as represented in the following Table 2.

**[Table 2]**

| Tunnel function list table (example) | |
|---|---|
| tunnel function | VPN device |
| | GRE tunnel device |
| | Vx LAN tunnel device |
| non-tunnel NW function | router |

Thus, the tunnel function list table 122 can be simplified, and the tunnel functions can be classified with smaller information amount than in the first and second embodiments. With the simplification of the tunnel function list table 122, the classification by the tunnel function classifier 113 may be changed as follows.

For example, when a node that is first discovered in the node search of the data transfer route is the tunnel function registered in the tunnel function list table 122, the tunnel function classifier 113 may classify and store the node as the tunnel function (generation).

Further, when a node discovered in the node search of the data transfer route is the tunnel function, and the last classified tunnel function is the tunnel function (termination), the tunnel function classifier 113 may classify and store the node as the tunnel function (generation).

Furthermore, when a node discovered in the node search of the data transfer route is the tunnel function, and the last classified tunnel function is the tunnel function (generation), the tunnel function classifier 113 may classify and store the node as the tunnel function (termination).

When a node discovered in the node search of the data transfer route is not registered in the tunnel function list table 122, the tunnel function classifier 113 may classify and store the node as the non-tunnel NW function.

The process of generating the hierarchized logical route information through the hierarchized logical route generator 114 may be changed with the change in the classification process by the tunnel function classifier 113.

An exemplary function configuration of a management server 11 according to a third embodiment may be the same as in the second embodiment (for example, FIG. 18), and an exemplary hardware configuration of the management server 11 according to the third embodiment may be the same as in the first embodiment (for example, FIG. 12).

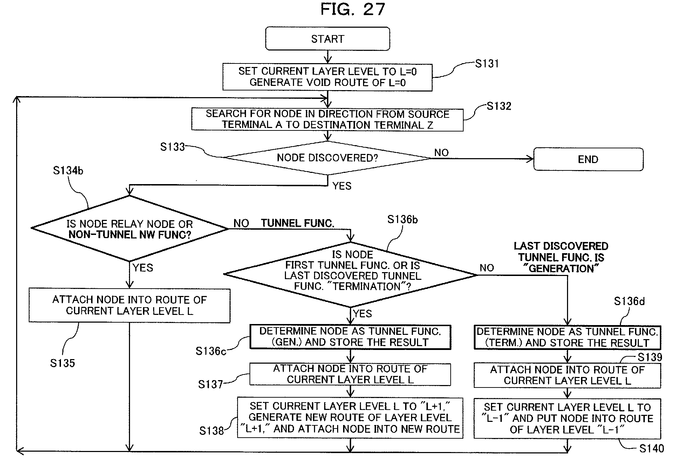

A flowchart of FIG. 27 illustrates an example of a process of generating the hierarchized logical route information through the hierarchized logical route generator 114 according to the third embodiment. FIG. 27 corresponds to the flowchart of FIG. 15 and differs from FIG. 15 in that Processing S134 and Processing S136 are replaced with Processing S134b and Processing S136b, and Processing S136c and Processing S136d are added.

In Processing S134b, the hierarchized logical route generator 114 determines whether or not the node Nx searched by tracing the data transfer route calculated by the route calculator 112 in the downstream direction is the relay node or the non-tunnel NW function regardless of a classification of generation and termination.

When the node Nx is determined to be the relay node or the non-tunnel NW function (YES in Processing S134b), the hierarchized logical route generator 114 may determine that the node Nx is a node constituting the route of the current layer level L. Base on the determination, the hierarchized logical route generator 114 may attach the node Nx into the route of the current layer level L (Processing S135).

On the other hand, when the node Nx is the tunnel function (NO in Processing S134b), the hierarchized logical route generator 114 may perform determination of Processing S136b. In Processing S136b, the hierarchized logical route generator 114 may determine whether or not the node Nx is the first discovered tunnel function or whether or not the last discovered tunnel function is "termination."

When "YES" is determined in Processing S136b, the hierarchized logical route generator 114 may determine that the discovered tunnel function (the node Nx) is the tunnel function (generation) and stores the determination result in the storage unit 210 (Processing S136c).

"NO" is determined in Processing S136b when the node Nx is not the first discovered tunnel function, and the last discovered tunnel function is the tunnel function (generation). In this case, the hierarchized logical route generator 114 may determine that the node Nx is the tunnel function (termination) and store the determination result in the storage unit 210 (Processing S136d).

### (Operation example)

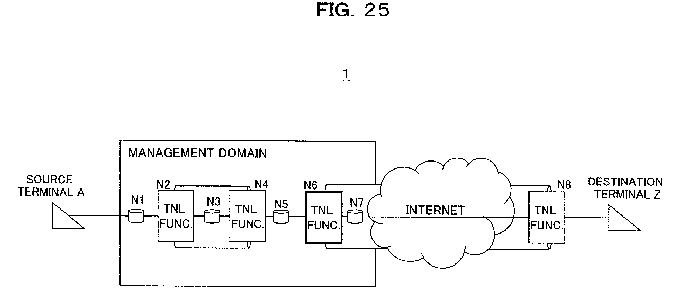

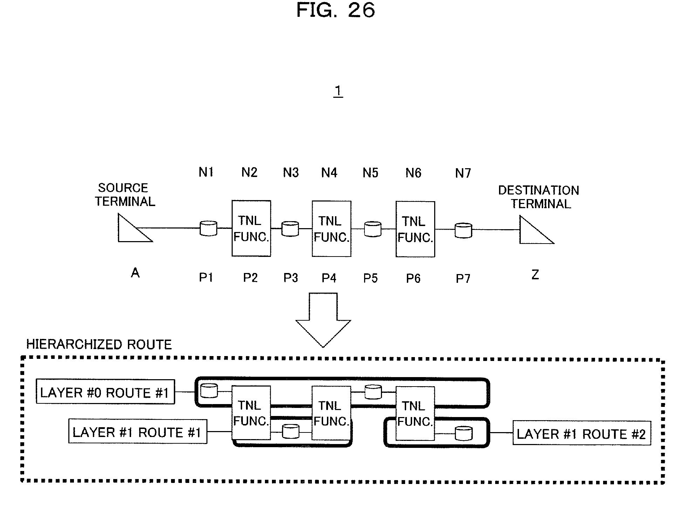

Next, an example of generating the hierarchized logical route information illustrated in FIG. 26 through the management server 11 for the service chain in which the "tunnel nesting" is not set as illustrated in FIG. 25 will be described as an operation example according to the third embodiment.

In FIG. 25, 8 nodes N1 to N8 exist in a data transfer route from a source node A to a destination node Z. The nodes N1 to N7 are positioned in the management domain of the management server 11. On the other hand, the node N8 is positioned outside the management domain of the management server.

A tunnel #1 is formed between the node N2 and the node N4, and a tunnel #2 routed through the Internet is formed between the node N6 and the node N8. The tunnel #1 and the tunnel #2 do not have a relation of "nesting."

The nodes N2 and N4 correspond to the tunnel function (generation) and the tunnel function (termination) in the management domain. The node N6 corresponds to the tunnel function (generation) in the management domain, and the node N8 corresponds to the tunnel function (termination) outside the management domain.

Thus, a route of the section of the tunnel #2 is a route in which only one (for example, the tunnel generation function) of a pair of tunnel functions exists in the management domain, and a route of the section of the tunnel #1 is a route in which both of a pair of tunnel functions exist in the management domain.

An example of generating the hierarchized the logical route information through the hierarchized logical route generator 114 for the node arrangement illustrated in FIG. 25 will be described below.

### (1) Start

The hierarchized logical route generator 114 sets the current layer level L to L=0, and searches for the node Nx by sequentially tracking the data transfer route in the direction from the source node A to the destination node Z (corresponding to Processing Steps S131 and S132 in FIG. 27).
- Current layer level L: 0
- Last discovered tunnel function: none
- Route #1 of layer #0: []

### (2) Node N1 discovery

The node N1 is discovered through the node search. The hierarchized logical route generator 114 determines that the node N1 is the relay node and the non-tunnel NW function based on the information of the tunnel function list table 122 (YES in Processing S134b in FIG. 27).

Thus, the hierarchized logical route generator 114 determines that the node N1 is a node constituting the route #1 of the current layer level L=0, and attaches the node N1 into the route #1 of the layer #0 (corresponding to Processing S135 in FIG. 27).
- Current layer level L: 0
- Last discovered tunnel function: none
- Transfer route 1 of layer 0: [N1]

### (3) Node N2 discovery

Then, the node N2 is discovered through the node search. The hierarchized logical route generator 114 determines that the node N2 is the tunnel function based on the information of the tunnel function list table 122 (NO in Processing S134b in FIG. 27).

Since the last discovered tunnel function is "none," the hierarchized logical route generator 114 determines that the node N2 is the tunnel function that is first discovered in the search (YES in Processing S136b in FIG. 27).

Thus, the hierarchized logical route generator 114 may determine that the node N2 is the tunnel function (generation) and store the determination result in the storage unit 210 (corresponding to Processing S136c in FIG. 27).

Since the node N2 is determined to be the tunnel function (generation), the hierarchized logical route generator 114 may determine that the node N2 is a node constituting the route #1 of the current layer level L=0. Base on the determination, the hierarchized logical route generator 114 may attach the node N2 into the route #1 of the layer #0 (corresponding to Processing S137 in FIG. 27).

The hierarchized logical route generator 114 may determine that the node N2 is a node constituting the lower layer #1 in which the current layer level L is changed by"+1." Base on the determination, the hierarchized logical route generator 114 may generate a new route #1 of the layer #1 and attach the node N2 into the route #1 of the layer #1 (corresponding to Processing S138 in FIG. 27).
- Current layer level L: 0+1=1
- Last discovered tunnel function: none -> tunnel function

### (generation)

- Route #1 of layer #0: [N1, N2]
- Route #1 of layer #1: [N2]

### (4) Node N3 discovery

Then, the node N3 is discovered through the node search. The hierarchized logical route generator 114 determines that the node N3 is the relay node and the non-tunnel NW function based on the information of the tunnel function list table 122 (YES in Processing S134b in FIG. 27).

Thus, the hierarchized logical route generator 114 may determine that the node N3 is a node constituting the route #1 of the current layer level L=1, and may attach the node N3 into the route #1 of the layer #1 (corresponding to Processing S135 in FIG. 27).
- Current layer level L: 1
- Last discovered tunnel function: tunnel function (generation)
- Route #1 of layer #0: [N1, N2]
- Route #1 of layer #1: [N2, N3]

### (5) Node N4 discovery

Then, the node N4 is discovered through the node search. The hierarchized logical route generator 114 determines that the node N4 is the tunnel function based on the information of the tunnel function list table 122.

Here, the last discovered tunnel function is the "tunnel function (generation)." Thus, the hierarchized logical route generator 114 may determine that the node N4 is the tunnel function (termination) (NO in Processing S136b in FIG. 27) and store the determination result in the storage unit 210 (corresponding to Processing S136d in FIG. 27).

The hierarchized logical route generator 114 may determine that the node N4 is a node constituting the route #1 of the current layer level L=1 and may attach the node N4 into the route #1 of the layer #1 (corresponding to Processing S139 in FIG. 27).

Further, the hierarchized logical route generator 114 may determine that the node N4 serving as the tunnel function is a node constituting the route #1 of the higher layer #0 in which the current layer level L=1 is changed by "-1" and may attach the node N4 into the route #1 of the layer #0 (corresponding to Processing S140 in FIG. 27).
- Current layer level L: 1-1=0
- Last discovered tunnel function: tunnel function (generation) - > tunnel function (termination)
- Route #1 of layer #0: [N1, N2, N4]
- Route #1 of layer #1: [N2, N3, N4]

### (6) Node N5 discovery

Then, the node N5 is discovered through the node search. The hierarchized logical route generator 114 determines that the node N5 is the relay node and the non-tunnel NW function based on the information of the tunnel function list table 122 (YES in Processing S134b in FIG. 27).

Thus, the hierarchized logical route generator 114 may determine that the node N5 is a node constituting the route #1 of the current layer level L=0 and may attach the node N5 into the route #1 of the layer #0 (corresponding to Processing S135 in FIG. 27).
- Current layer level L: 0
- Last discovered tunnel function: tunnel function (termination)
- Route #1 of layer #0: [N1, N2, N4, N5]
- Route #1 of layer #1: [N2, N3, N4]

### (7) Node N6 discovery

Then, the node N6 is discovered through the node search. The hierarchized logical route generator 114 determines that the node N6 is the tunnel function based on the information of the tunnel function list table 122.

Here, the last discovered tunnel function is the "tunnel function (termination)." Thus, the hierarchized logical route generator 114 may determine that the node N6 is the tunnel function (generation) (YES in Processing S136b in FIG. 27) and store the determination result in the storage unit 210 (corresponding to Processing S136c in FIG. 27).

The hierarchized logical route generator 114 may determine that the node N6 serving as the tunnel function is a node constituting the route #1 of the current layer level L=0 and may attach the node N6 into the route #1 of the layer #0 (corresponding to Processing S137 in FIG. 27).

Further, for the node N6, the hierarchized logical route generator 114 generates a new route #2 of the lower layer #1 in which the current layer level L=0 is changed by "+1" and attaches the node N6 into the route #2 of the layer #1 (corresponding to Processing S138 in FIG. 27).
- Current layer level L: 0+1=1
- Last discovered tunnel function: tunnel function (termination) → tunnel function (generation)
- Route #1 of layer #0: [N1, N2, N4, N5, N6]
- Route #1 of layer #1: [N2, N3, N4]
- Route #2 of layer #1: [N6]

### (8) Node N7 discovery

Then, the node N7 is discovered through the node search. The hierarchized logical route generator 114 determines that the node N7 is the relay node and the non-tunnel NW function based on the information of the tunnel function list table 122 (YES in Processing S134b in FIG. 27).

Thus, the hierarchized logical route generator 114 may determine that the node N7 is a node constituting the route #2 of the current layer level L=1 and may attach the node N7 into the route #2 of the layer #1 (corresponding to Processing S135 in FIG. 27).
- Current layer level L: 1
- Last discovered tunnel function: tunnel function (generation)
- Route #1 of layer #0: [N1, N2, N4, N5, N6]
- Route #1 of layer #1: [N2, N3, N4]
- Route #2 of layer #1: [N6, N7]

### (9) End

Since the destination node Z is searched through the node search, all the nodes Nx in the data transfer route are searched (NO is determined in Processing S133 in FIG. 27). Thus, the hierarchized logical route generator 114 may end the process of generating the hierarchized logical route information.

Through the above process, for the exemplary node arrangement of FIG. 25 (that is, the return path of the data transfer route of FIG. 22), information of the following three hierarchized logical routes is finally generated in the management server 11 as illustrated in FIG. 26. The generated hierarchized logical route information may be, for example, stored in the storage unit 210 (see FIG. 12).
1. Route #1 of layer #0: [N1, N2, N4, N5, N6]
2. Route #1 of layer #1: [N2, N3, N4]
3. Route #2 of layer #1: [N6]

An example of generating the route information based on the hierarchized logical route information through the route information generator 115 is the same as in the second embodiment (including the modified example). For example, the route information generator 115 may generate the route information for each of the three hierarchized logical routes according to the flowchart illustrated in FIG. 21.

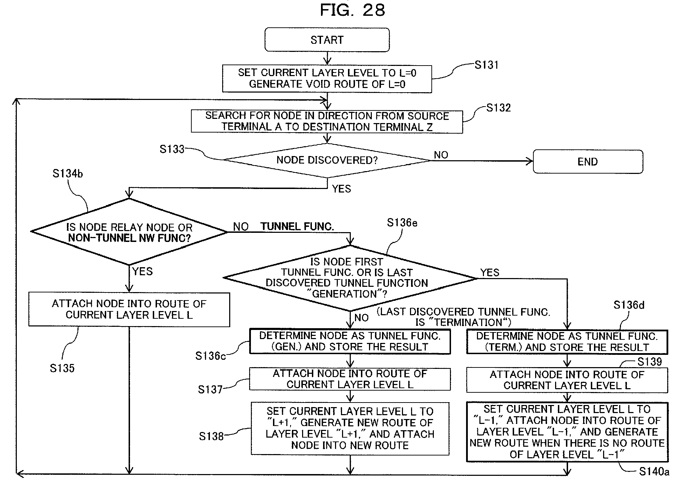

For the data transfer route (the return path) in the direction from the destination node Z to the source node A in the exemplary node arrangement of FIG. 25, the hierarchized logical route generator 114 preferably operates, for example, according to the flowchart illustrated in FIG. 28.

FIG. 28 differs from FIG. 27 in that Processing S136b is replaced with Processing S136e, and Processing S140 is replaced with Processing S140a illustrated in FIG. 24. The other processes are the same as or similar to the above-described processes.

In Processing S136e of FIG. 28, the hierarchized logical route generator 114 may determine whether or not the node Nx serving as the tunnel function is the first discovered tunnel function or whether or not the last discovered tunnel function is "generation."

When "YES" is determined in Processing S136e, the hierarchized logical route generator 114 may determine that the discovered tunnel function (the node Nx) is the tunnel function (termination) and store the determination result in the storage unit 210 (Processing S136d).

"NO" is determined in Processing S136e when the node Nx is not the first discovered tunnel function and the last discovered tunnel function is the tunnel function (termination). In this case, the hierarchized logical route generator 114 may determine that the node Nx is the tunnel function (generation) and store the determination result in the storage unit 210 (Processing S136c).

In Processing S140a, the hierarchized logical route generator 114 determines that the node Nx is the tunnel function (termination) and attaches the node Nx in the route of the current layer level L to a route of a higher layer in which the current layer level L is changed by "-1." At this time, when the route of the higher layer is not generated yet, the hierarchized logical route generator 114 may generate a new route of the higher layer and attach the node Nx into the new route.

As described above, according to the third embodiment, when there is no tunnel nesting in the data transfer route, it is possible to classify the tunnel function with smaller information amount than in the first and second embodiments, and thus it is possible to reduce, for example, the storage capacity prepared for the tunnel function list table 122.

Further, it is possible to simplify the process of generating the hierarchized logical route information through the hierarchized logical route generator 114 and the process of generating the route information through the route information generator 115.

According to the above-described technology, an appropriate route setting can be performed even when a tunnel section is included in a data transfer route.

## Claims

1. A network controller (11) that controls a setting of a data transfer route in a network, comprising:
a specifying unit (114) configured to specify a tunnel section in the data transfer route routed through a plurality of nodes (Nx) in the network based on classification information in which the plurality of nodes (Nx) are classified according to whether each of the nodes corresponds to a tunnel node available to generate or terminate a tunnel in the data transfer route;
a route information generator (115) configured to generate route information in which a tunnel node positioned at a start point of the specified tunnel section is set as a source node and a tunnel node positioned at an end point of the specified tunnel section is set as a destination node; and
a route information setting unit (116) configured to set the generated route information to a node position in the specified tunnel section.

2. The network controller according to claim 1,
wherein a part or all of the plurality of nodes (Nx) is a virtual machine.

3. The network controller according to claim 1 or 2,
wherein the route information setting unit (116) sets the route information to a node position on a midway of the specified tunnel section.

4. The network controller according to any one of claims 1 to 3,
wherein the specifying unit (114) hierarchizes the data transfer route into logical routes for each tunnel section based on the classification information, and
the route information generator (115) generates the route information for each of the hierarchized logical routes.

5. The network controller according to claim 4,
wherein the route information generator (115) generates the route information for the tunnel node positioned at the start point of the tunnel section that belongs to a route of a non-top layer among the hierarchized logical routes, and generates route information that refers to the route information for a route of a layer higher than the non-top layer.

6. The network controller according to claim 4 or 5,
wherein the specifying unit (114)
sets a layer level L (L is an integer) to L=0 and searches for a node by tracing the data transfer route in a direction from a source terminal to a destination terminal,
attaches the node discovered by the search into a route of a current layer level L, when the discovered node is determined to be a non-tunnel node based on the classification information,
attaches a first tunnel node that generates the tunnel into both of the route of the current layer level L and a route of a layer level "L+1", when the node discovered by the search is determined to be the first tunnel node that generates the tunnel based on the classification information, and
attaches a second tunnel node that terminates the tunnel into both of the route of the current layer level L and a route of a layer level "L-1", when the node discovered by the search is determined to be the second tunnel node that terminates the tunnel based on the classification information.

7. The network controller according to claim 1, further comprising,
a tunnel end determiner (117) configured to determine whether or not there is the tunnel node positioned at the end point of the tunnel section in a management domain in the data transfer route, the management domain being managed by the network controller (11),
wherein, the route information generator (115) acquires, when the tunnel end determiner (117) determines that there is no tunnel node positioned at the end point of the tunnel section in the management domain, address information of the tunnel node positioned at the end point based on tunnel setting information for generating the tunnel, and generates the route information having the acquired address information set as a destination address.

8. The network controller according to claim 7, further comprising,
a storage unit (123; 210) configured to store the tunnel setting information,
wherein the route information generator (115) acquires the tunnel setting information from the storage unit.

9. The network controller according to claim 7,
wherein the route information generator (115) accesses the tunnel node positioned at the end point, and acquires the tunnel setting information stored in the tunnel node.

10. The network controller according to claim 1, further comprising,
a tunnel end determiner (117) configured to determine whether or not there is the tunnel node positioned at the end point of the tunnel section in a management domain in the data transfer route, the management domain being managed by the network controller (11),
wherein, the route information generator (115) generates, when the tunnel end determiner (117) determines that there is no tunnel node positioned at the end point of the tunnel section in the management domain, the route information having a default address set as a destination address.

11. The network controller according to claim 4 or 5, further comprising,
a tunnel end determiner (117) configured to determine whether or not there is the tunnel node positioned at the end point of the tunnel section in a management domain in the data transfer route, the management domain being managed by the network controller (11),
wherein, when the tunnel end determiner (117) determines that there is no tunnel node positioned at the end point of the tunnel section in the management domain and when the specifying unit determines that the node discovered by searching for a node by tracing the data transfer route in a direction from a source terminal to a destination terminal corresponds to the tunnel node which terminates the tunnel based on the classification information, the specifying unit (114) attaches the tunnel node which terminates the tunnel into both of a route of a layer level L (L is an integer) and a route of a layer level "L-1", and
when the route of the layer level "L-1" is not generated yet, the specifying unit (114) generates a new route of the layer level "L-1" and attaches the tunnel node which terminates the tunnel into the new route.

12. A network system comprising:
a plurality of nodes (Nx); and
a network controller (11) configured to control a setting of a data transfer route routed through the plurality of nodes (Nx),
wherein the network controller (11) comprises
a specifying unit (114) configured to specify a tunnel section in the data transfer route based on classification information in which the plurality of nodes (Nx) are classified according to whether each of the nodes is a tunnel node available to generate or terminate a tunnel in the data transfer route,
a route information generator (115) configured to generate route information in which a tunnel node positioned at a start point of the specified tunnel section is set as a source node and a tunnel node positioned at an end point of the specified tunnel section is set as a destination node, and
a route information setting unit (116) configured to set the generated route information to a node position in the specified tunnel section.
